# EUROPEAN PATENT SPECIFICATION

(11) **EP 1 342 372 B1**
(45) Date of publication and mention of the grant of the patent: **20.06.2007**
(21) Application number: 01908092.8
(22) Date of filing: 27.02.2001
(51) Int. Cl.: H04N 7/10, H04N 7/173

(54) **SYSTEM AND METHOD FOR EXPANDING THE OPERATIONAL BANDWIDTH OF A COMMUNICATION SYSTEM**
SYSTEM UND VERFAHREN ZUR ERWEITERUNG DER OPERATIVEN BANDBREITE EINES ÜBERTRAGUNGSSYSTEMS
SYSTEME, APPAREIL ET PROCEDE PERMETTANT D'AUGMENTER LA LARGEUR DE BANDE OPERATIONNELLE D'UN SYSTEME DE COMMUNICATION

(30) Priority: 16.10.2000 WO PCT/IL00/00655
(43) Date of publication of application: 10.09.2003
(73) Proprietor: Xtend Networks Ltd., 68012 Tel Aviv (IL)
(72) Inventor: WEINSTEIN, Hillel, 34363 Haifa (IL); ORBACH, Zeev, 78484 Ashkelon (IL)
(74) Representative: Rapp, Bertram
(86) International application number: PCT/IL2001/000181
(87) International publication number: WO 2002/033969

(56) References cited:
- EP-A- 0 589 531
- US-A- 4 970 722
- US-A- 5 774 458
- US-A- 5 963 844

## Description

### BACKGROUND OF THE INVENTION

### FIELD OF THE INVENTION

The present invention generally relates to a system and method of improving the information transfer capabilities of a communication system. More particularly, the present invention relates to a system, apparatus and method for substantially expanding the range of frequencies utilizable by a cable television network for broadband signal transmission.

### DISCUSSION OF THE RELATED ART

Cable television (CATV) is a form of broadcasting that transmits programs to paying subscribers via a physical land-based infrastructure of coaxial cables or via a combination of fiber-optic and coaxial cables rather than through the airwaves. Thus CATV networks provide a direct link from a transmission center, such as a head-end, to a plurality of subscribers located at typically addressable remote locations, such as homes and businesses. The CATV networks utilize a signal distribution service transmitting FM radio broadcasts, multi-channel TV programs, Pay-Per-Movie (Video on Demand), information services such as videotext, and the like. In recent years novel services were made available to the subscribers. Such services include interactive services. One such service regards a two-way, interactive communication involving access to established data communication networks, such as the Internet.

A CATV system comprises a plurality of elements, which are operative in maintaining the flow of electrical data information through a coaxial conductor or through a combination of fiber-optic and coaxial cables to subscribers. The infrastructure of the system is required to span vast urban areas by cables installed underground or on high poles in order to be distributed to the subscribers. It is routinely expected that the transmitted signals be kept at their highest possible fidelity having the lowest possible random energy interference level.

A CATV head-end is the central transmission center operative to gather gathering and to provide complex audio, visual, and data media. At the head-end external signals such as satellite, microwave, and local TV station broadcasts are received from the various types of employed antennas. Additionally, locally produced and pre-recorded programs can be introduced into the system. The head-end responsibility is to process and to combine the received signals. In addition, the head-qnd assigns a channel frequency to all the signals destined for cable distribution. The programs relayed multiplexed into mapped channels, which are then offered to the subscribers selectively or are bundled as packages. Pay-per-View and special pay channels are added by keying the subscribers' set-top boxes or by phone authorization from the subscribers. If an upstream channel is operative in the network the option of electrical authorization can be provided to the subscribers.

A plurality of trunk cables, constructed of large diameter coaxial cables or of a combination of coaxial and fiber-optic cables, carry the signals from the head-end to a series of distribution points. Such distribution points are hub stations, Trunk cables share the same properties, as do generic transmission lines with regard to signal attenuation. Therefore, in order to maintain adequate signal strength over long distances, amplifiers are required at regular intervals. Feeder cables branch out from the trunks and are responsible for serving local neighborhoods. Feeder cables are tapped at recurrent locations to furnish the familiar coaxial drop cables that enter directly into the CATV subscriber's premises. Terminal equipment is connected to the drop cable inside a CATV subscriber's home via a wall outlet. Among the more common terminal devices are televisions, VCRs, set-top boxes, converters, de-scramblers, cable modems, and splitters.

The rigid standards under which the CATV systems are designed, engineered, and built, presently allow the overall spectral band width utilized for the transmission of signals to reach only about 750 MHz with about 1 GHz as the foreseeable future limit. Current CATV systems use the 5-35 MHz frequency band for reverse channel communication and the 100-750 MHz frequency band is used for the forward channel. The bandwidth is substantially limited by the conventional design of the components constituting the distribution plant.

The recent advent of two-way digital data services such as the Internet supported by the addition of data network browsers embedded into data network server systems interfacing into the CATV head-ends or into the CATV hub stations requires significantly high two-way bandwidth to enable the efficient transfer of data services. To enable the provision of two-way data services within the current 5-750MHz band spectrum spaces for the forward (downstream) transmission of the digital information have to be cleared and reserved for Internet data while return digital communication is relayed on a specifically allocated upstream path. Alternatively separate telephone communication lines are utilized for the subscriber. In order to integrate the two-way transmission of the added digital information within the existing usable bandwidth, all current CATV systems have in common a single small return path for upstream transmission allocated to the 5-35 MHz range. Additional bandwidth for reverse communication may also be allocated at the high end 750 - 1000 MHz band, as suggested for example by US Patents Nos. 5,774,458 and 5,963,844. However, for the forward data path the possibilities are substantially limited. One option is to free currently active channels within the allocated 35-450, 35-550, 35-650, or 35-750 MHz downstream bandwidth for the downstream transmission. Another option is the multiplexing of forward data paths into the currently active channels within the allocated 35-450, 35-550, 35-650, or 35-750 MHz downstream bandwidth. The main problem concerning the existing options regarding the increase of the quantity of transmitted information is that the current requirements for the quantity of the transmitted information are substantially higher than the potential increase provided by the above mentioned options.

Distributing signals on frequencies above the UHF band is disclosed in EP-A-0 589531.

Thus in order to accomplish the integration of the two-way data information services involving interactive communications into the existing CATV systems, the signal transfer capabilities of the cable networks must be substantially enhanced. The needs and requirements for faster two-way data transfer bring into focus the bandwidth constraint problem. This problem relates to the limitation regarding the range of the useable frequencies that are available for signal transmission. Due to various problems related to the design, the engineering, and the manufacturing of the components constituting the current cable plant infrastructure prior solutions do not allow transmission in the frequencies above 750MHz. Therefore, there is a need to improve the performance of the CATV system by expanding the bandwidth capabilities of a conventional CATV system without having to replace the existing coaxial cable infrastructure.

The object of the present invention is to introduce a system, apparatus and method for expanding the operational bandwidth of a CATV system, for both the forward data signal path from the data network servers to the CATV subscriber and the reverse data path signal path. The present invention makes available a multiple Gbps symmetrical or asymmetrical service to subscribers of a cable communication network.

### SUMMARY OF THE PRESENT INVENTION

The aspects of the present invention are set out in the claims.

One aspect of the present invention regards a system for extending the transmission path across a range of frequencies. The system contains a compensation unit for dividing and amplifying a signal, a home outlet splitter unit for dividing, amplifying and splitting a signal, a home outlet unit for expanding bandwidth and filtering frequencies, an extension unit to a set top box, and an enhanced cable connector assembly for transmitting a signal. The system thereby enables the transmission of data at substantially higher data rates.

The second aspect of the present invention regards an extension unit to a set-top box which includes tuner means for controlling the additional channels within the extended range of frequencies, switching means to enable selection of mode of operation, filtering means to separate the appended extended range of frequencies to downstream and upstream regions, modem means to encode the information and transmit data to the subscriber, and modem means to decode the information received from the subscriber and transmit the information upstream to the hub station unit.

The third aspect of the present invention regards a compensation unit for the division and amplification of a signal. The compensation unit includes a frequency band divider means to separate at least two signal streams for selective processing, a downstream signal amplifying means for amplifying a signal representative of information units transmitted by a transmission center to users, and an upstream signal amplifying means for amplifying a signal representative of information sent by users to a transmission center.

The fourth aspect of the present invention regards a hub station unit for adding gain and slope to losses of the signal transmitted and for combining the signal transmitted by a transmission center with a signal transmitted by a data communication unit. The hub station includes means for adding gain and slope to losses of the ,signal transmitted in the downstream direction from a transmission center to the users, means for adding gain and slope to losses of the signal transmitted in the upstream direction from the users to the transmission center, and multiplexer means to combine the signal transmitted by a transmission center with the signal transmitted by a data communication unit.

The fifth aspect of the present invention regards a home splitter unit for splitting and amplifying a signal. The home splitter unit includes divider means to split the signal modulated across the extended range of frequencies to a varied number of users, and amplifier means to compensate for the losses in the signal due to line characteristics.

The sixth aspect of the present invention regards a home outlet unit for expanding bandwidth and filtering frequencies, the home outlet unit includes bandwidth expanding means to add to the standard usable bandwidth an extended range of frequencies, and filtering means to separate the appended extended range of frequencies to downstream and upstream pass regions.

The seventh aspect of the present invention regards a communication network utilizing a communication media infrastructure for the transmission of a broadband signal representative of information units received from and sent to external information sources. The information units are encoded into modulated electronic signals. The signals are multiplexed into a broadband electronic signal and sent from a transmission center via diverse electronic components operative in the preservation of the transmitted signal's vital characteristics to a plurality of users and from the plurality of users via the transmission media via the diverse electronic components operative in maintaining the functional characteristics of the transmitted signal to the transmission center. The communication network contains a method for utilizing an expanded transmission path operative across a substantially increased range of frequencies. The method includes combining the signals representative of the information received from information sources/users into a combined broadband signal modulated across a substantially expanded bandwidth, superimposing signals representative of information units received from additional information sources connected at various locations to the transmission path onto the broadband signal modulated across the substantially expanded bandwidth, transmitting the combined broadband signal modulated across a substantially expanded bandwidth to a plurality of users/transmission center, and maintaining the functional characteristics of the broadband signal modulated across a substantially expanded bandwidth during a series of processing activities performed by a set of components operatively participating in the expanded bandwidth transmission process whereby utilizing the standard transmission medium previously operating in a significantly narrower bandwidth for transmission in a substantially expanded bandwidth.

The eighth aspect of the present invention regards a two-way multi-user transmission and communication system having the capability of utilizing a substantially expanded range of frequencies in order to transmit a significantly increased quantity of information units encoded into electronic signals and inserted into a transmittable broadband signal at frequency-related locations the broadband signal having prior transmittable information multiplexed therein without affecting the simultaneous transmission of the existing transmittable information to a plurality of users in response to the users' corresponding demands. The system includes a compensation unit including downstream and upstream amplifying units in order to amplify the broadband signal, a home outlet splitter unit including a signal divider to distribute the split broadband signal modulated across a substantially expanded range of frequencies among a predefined group of users, a home outlet unit including filtering components having the capability of handling an expanded range of frequencies in order to separate the broadband signal into predefined range of and to suitable manipulate the broadband signal elements inserted into the significantly expanded bandwidth region, and an extension unit to a set-top box interfacing with a terminal or any other communication device including tuner components to control the additional channels combined within the expanded region of the frequency bandwidth, filtering components to separate the diverse frequency regions, modulators, and demodulators to decode the signal in order the enable the user to interact with the various elements of the signal and to encode the information resulted from the users request into the upstream region of the broadband signal, and an enhanced cable connector assembly to provide for the downstream and upstream transmission of the signals having the proper spectral response characteristics.

Each of the above embodiments of the present invention contributes to an enhanced transmission of information units within a transmission and communication system in the about 1GHz to the about 3GHz frequency range.

Each of the above embodiments of the present invention provides for the utilization of a substantially expanded transmission bandwidth for the transmission of information having diverse content such as video, audio and data.

Each of the above embodiments of the present invention provides for substantially improving the data transmission rates within a transmission and communication system.

### BRIEF DESCRIPTION OF THE DRAWINGS

The novel features of the present invention are set forth in the appended claims. The invention itself, as well as a preferred mode of usage will be best understood by reference to the following detailed description of an illustrative embodiment when read in conjunction with the accompanying drawings, wherein:
Figs. 1A is a graphical representation of the spectral response of the standard CATV system; and
Fig. 1B is a graphical representation of the spectral response of the Extended Bandwidth Cable System (XBCS), in accordance with a preferred embodiment of the present invention; and
Fig. 2 is a block diagram of a standard CATV system; and
Fig. 3 is a schematic illustration of a standard CATV subscriber home outlet; and
Fig. 4 is a schematic illustration of an XBCS CATV subscriber home outlet in accordance with a preferred embodiment of the present invention; and
Fig. 5 illustrates the electrical circuitry of a XBCS CATV subscriber home outlet, in accordance with a preferred embodiment of the present invention; and
Fig. 6 is a schematic illustration of the XBCS set-top unit, in accordance with preferred embodiment of the present invention; and
Fig. 7 is a schematic illustration of the symmetrical XBCS set-top unit, in accordance with a preferred embodiment of the present invention; and
Fig. 8 is a schematic view of the XCBS CATV subscriber home outlet splitter, in accordance with a preferred embodiment of the present invention; and
Figs 9A, 9B, 9C are schematic views of a XBCS splitter nearest to the subscriber home outlet including the symmetrical added units, in accordance with a preferred embodiment of the present invention; and
Fig. 10 is a graphical representation of the mechanical connections to a typical CATV hub; and
Fig. 11 is a diagram showing the mechanical introduction of a proposed hub modification into the XBCS hub, in accordance with preferred embodiment of the present invention; and
Fig.12 is a combined schematic block diagram and a general view illustrating the new hub module of the XBCS system, in accordance with a preferred embodiment of the present invention; and
Fig. 13 is a schematic block diagram of the new asymmetrical hub module circuitry of the XBCS system, in accordance with a preferred embodiment of the present invention;
Fig. 14 is a general view illustrating the mechanical introduction of a new symmetrical hub module into a typical CATV hub, in accordance with a preferred embodiment of the present invention; and
Fig. 15 is a combined schematic block diagram showing the new symmetrical hub circuitry of the XBCS system, in accordance with a preferred embodiment of the present invention; and
Fig. 16 is a schematic block diagram showing the proposed compensation unit of the XBCS system, in accordance with a preferred embodiment of the present invention; and
Fig. 17 is a graphical representation of the introduction of the proposed compensation unit as a standalone signal booster into the CATV system, in accordance with a preferred embodiment of the present invention; and
Fig. 18 is a schematic block diagram of the XBCS compensation circuitry, in accordance with a preferred embodiment of the present invention; and
Fig. 19 is a wiring diagram of the frequency selective circuits implemented in the compensation unit of figure 18, in accordance with a preferred embodiment of the present invention; and
Fig. 20 is a schematic block diagram of the slope amplitude equalizer circuit implemented in the compensation unit of figure 18, in accordance with a preferred embodiment of the present invention; and
Fig. 21 is a graphical representation of the dynamic signal attenuation and respective signal boosting points along the transmission pass of a CATV signal from a head-end to a subscriber; and
Fig. 22 is a graphical representation of the dynamic signal attenuation and corresponding signal boosting points along the transmission path of a typical CATV signal from a head-end'to a subscriber including compensation units as enhancements, in accordance with a preferred embodiment of the present invention; and
Fig. 23 is a perspective view of the standard coaxial cable connector used in a conventional CATV system; and
Fig. 24 is a perspective view of the standard coaxial cable connector and attached N type coaxial adapter, in accordance with a preferred embodiment of the present invention; and
Fig. 25 is illustrative of the method of connecting the compensation unit into the CATV system employing the standard coaxial connector in combination with a type N coaxial adapter, in accordance with a preferred embodiment of the present invention; and
Fig. 26 is a perspective view of the standard semi-rigid coaxial connector and attached center conductor adapter, in accordance with a preferred embodiment of the present invention; and
Fig. 27 is illustrative of the method of connecting the compensation unit into the CATV system via the utilization of the standard coaxial cable connector and attached adapter to the F type ports.

### DETAILED DESCRIPTION OF THE PREFERRED EMBODIMENT

The present invention teaches a novel and useful method and system for the expansion of the functional bandwidth of a two-way multi-user communication system. The present invention proposes to improve the performance of CATV systems by the expansion of the infrastructure usable bandwidth capabilities of conventional CATV systems by multiple factors without requiring replacement of the existing coaxial cable infrastructure. Such expansion of the bandwidth can be accomplished by the addition of new advanced CATV components to the system and by the enhancement of existing CATV system components for enabling two-way forward and reverse transmission of signals over frequencies ranging from about 1GHz to the about 3GHz bandwidth.

In the preferred embodiment of the present invention the communication system is a cable television communication system (CATV) distributing audio, visual, analog or digital information to paying subscribers. Information sources include FM radio broadcasts, local,'satellite or microwave TV stations, multi-channel TV programs, video-on-demand services, data communication services, and the like. The proposed system described in detail later hereunder will be referred to as the Extended Bandwidth Cable System (XBCS).

In order to depict in detail the means, through which the proposed objectives are attained, the present invention describes the modifications and additions needed across the entire set of the standard CATV components constituting the CATV infrastructure. The teaching of the method and system encompasses the physical, and the electronic means that will be applied to achieve an optimal level of operation for the proposed system. Such modifications and additions create new components resulting in combination with a new system.

In the typical CATV system information units encoded into electronic signals are received at a transmission center, such as a head-end or a hub station, from a plurality of transmitting information sources. The received signals are suitably processed, frequency-mapped into predefined channels spread across a substantially expanded range of frequencies, multiplexed into a broadband signal modulated across a predefined portion of a substantially increased functional frequency range, and distributed forward to a plurality of subscribers along a controlled transmission path. Transmission of encoded information units modulated across another predefined portion of the same substantially increased frequency range in the reverse direction, from a plurality of subscribers to the transmission center, is also provided. Along the transmission path diverse components operative in dynamically manipulating the required physical characteristics of the transmitted signal as well as in properly maintaining signal parameters vital to the integrity of the reproducible information encoded in the signal, are suitably enhanced by the addition of specific new elements in order to handle the signal modulated across the entire substantially increased transmission bandwidth.

For the sake of clarity the terms "signals" or "data" or "data signals" throughout this application refer to, analog or digital signals, including video, audio or any other data representing information. In a preferred embodiment of the invention, the delivery of the information from a transmission center, such as a head end or a hub station, to the subscribers and from the subscribers back to the transmission center is accomplished by impressing encoded information on a carrier wave propagating within the transmission line through the controllable modulation of the frequency of the carrier wave. In addition to frequency modulation other types of modulation methods can be used and fall within the scope of the invention. In addition to television programs and data network packets the signals transmitted within the system may include other types of information such as video-on-demand. In other preferred embodiments of the present invention the communication system could be a satellite communication system, a cellular network, or any other communication infrastructure operative in connecting diverse communication nodes located at remote locations.

Fig. 1A generally depicts the spectra of an existing CATV system. The 35-750 MHz region 12 is utilized for the forward (downstream) transmission of the information impressed on a broadband signal from the head-end to the subscribers. The measure of the total utilized bandwidth is typically the function of the number of active channels in a cable network carrying information from a corresponding number of information sources. As a standard TV channel is allocated a 6 MHz bandwidth under the NTSC standard, a system with a channel capacity of 60 can be realized with a total bandwidth of 550 MHz while a 100-channel system can be realized with a total bandwidth of 750 MHz. Currently different CATV systems utilize different bandwidth sizes. According to the number of channels carried typical systems use the 35-450 MHz band 12, the 35-550 MHz band 14, the 35-650 MHz band 16, and the 35-750 MHz band 18. Where applicable the 5-35 MHz region 10 is utilized as the reverse (upstream) path of signals collected from the subscribers and transmitted therefrom back to the head-end.

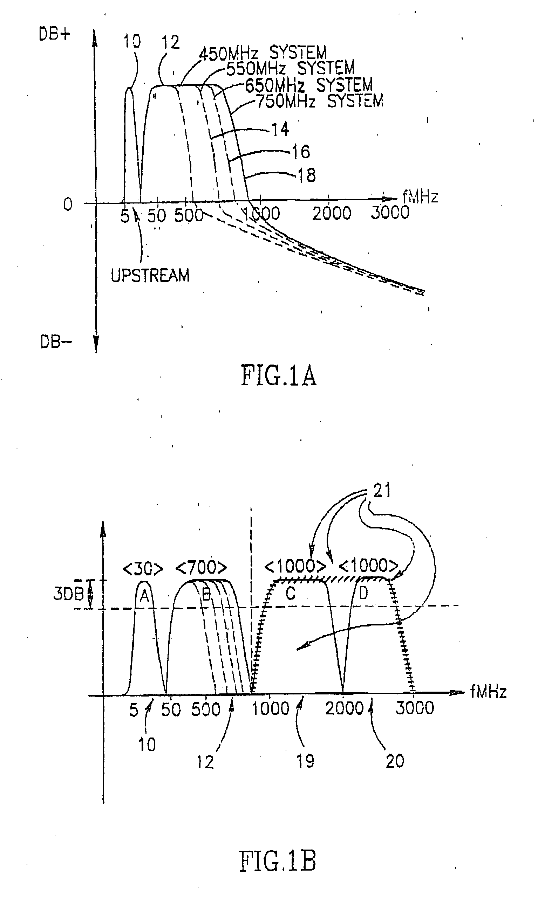

Fig. 1 B shows the spectra of the proposed XBCS system, in accordance to a preferred embodiment of present the invention. In order to support downward compatibility with the existing CATV systems the 5-35 MHz region 10 is utilized as an upstream path and the 35-750 MHz region 12 is used for the forward (downstream) transmission of the information impressed on a broadband signal from the head-end to the subscribers. In addition to the existing 50-750 MHz CATV mapped downstream region 12, an extended frequency region (XFR) 21, is added to the usable bandwidth. In the preferred embodiment of the present invention, the XFR 21 is allocated a frequency range of about 2000 MHz by defining the lower and upper limits of the region 21 as 1000 MHz and 3000 MHz respectively.. The XFR 21 can be divided into downstream and upstream portions in accordance with the system's mode of operation. The system could operate in an asymmetric mode or a symmetric mode. The term asymmetric refers to a mode of operation in a two-way communication system in which the data speed or the quantity of data transmitted differs in one direction as compared with the other direction, averaged over time. Conversely, the term symmetric refers to a mode of operation in which the data speed or the quantity of data transmitted is equal in both directions. In the preferred embodiment of the present invention, in the symmetric mode, the XFR 21 of about 2000 MHz is divided into an about 1000 MHz upstream sub-region extending across the about 1050-1950 MHz range 19, and an about 1000 MHz downstream sub-region 20 extending across the about 2150-3000 MHz range. The additional frequency ranges 19, 20 are having additional channels mapped therein thereby providing substantially increased capacity in regard to the number of extra information sources and services to be provided to the, subscribers. In the asymmetric mode, the XFR 21 of about 2000 MHz that extends across the entire of about 1000-3000 MHz range is utilized entirely as the downstream sub-region. For the upstream transport the 5-35 MHz region 10 is used. The considerably extended usable bandwidth of the proposed system, apparatus and method allows the XFR 21 can be partitioned such that close proximity of the upper limit of a lower frequency band to the adjacent lower limit of a neighboring higher frequency band is avoided. The XFR 21 can be divided into non-contiguously allocated frequency range slots by the insertion of guard bands having a predefined range value between two neighboring frequency bands. As a result, no interference will occur among the different frequency bands along the respectively separated boundaries thereof.

According to the functionality, the operational mode and the configuration of the cable plant, the partitioning of the XFR 21 into functional sub-regions by the allocation of specific frequency bands to respective sub-regions, could be made by using diverse methods in order to achieve optimal performance of the system. For example, in the asymmetric operational mode, the downstream path could be allocated a 1800 MHz range while the upstream path could be allocated a 200 MHz. Different, partitioning methods will result in different range values. For example the XFR 21 can be divided into an upstream frequency band and a downstream frequency band in the following manner. (For the clarity of the description non-contiguous partitioning is avoided in the example).

| | | |
|---|---|---|
| Upstream : 1600 MHz | | Downstream : 400 MHz |
| Upstream: 1500 MHz | | Downstream: 500 MHz |
| Upstream : 1400 MHz | | Downstream : 600 MHz |
| Upstream : 1200 MHz | | Downstream : 800 MHz |
| Upstream : 1100 MHz | | Downstream : 900 MHz |
| | ... | |
| Upstream : 500 MHz | | Downstream: 1500 MHz |
| | ... | |

It would be obvious to one with ordinary skill in the art that diverse other partitioning formulas are available to accomplish a plurality of frequency limit variations and transmission path combinations resulting from the diverse allocation methods of frequency range values.

As a result of the known frequency response characteristics of signals in the higher frequency ranges the XFR 21 of about 1000-3000 MHz bandwidth supplies substantially lower amplitude values in respect to the standard value maintained by the regular CATV system by about -15dB. In the preferred embodiment of the present invention, in order to boost the signal level of the XFR 21 of about 1000-3000 MHz to the operative level, the existing CATV infrastructure is overlaid with additional XBCS new elements designed to equalize the signal level differences across the range of frequencies added.

It will be easily perceived by one with ordinary skill in the art that the details, the range of frequency domains, and the respective quantitative figures given in the foregoing description are merely exemplary. The details disclosed should not be interpreted as limitations but merely as example instrumental to a clear understanding of the present invention.

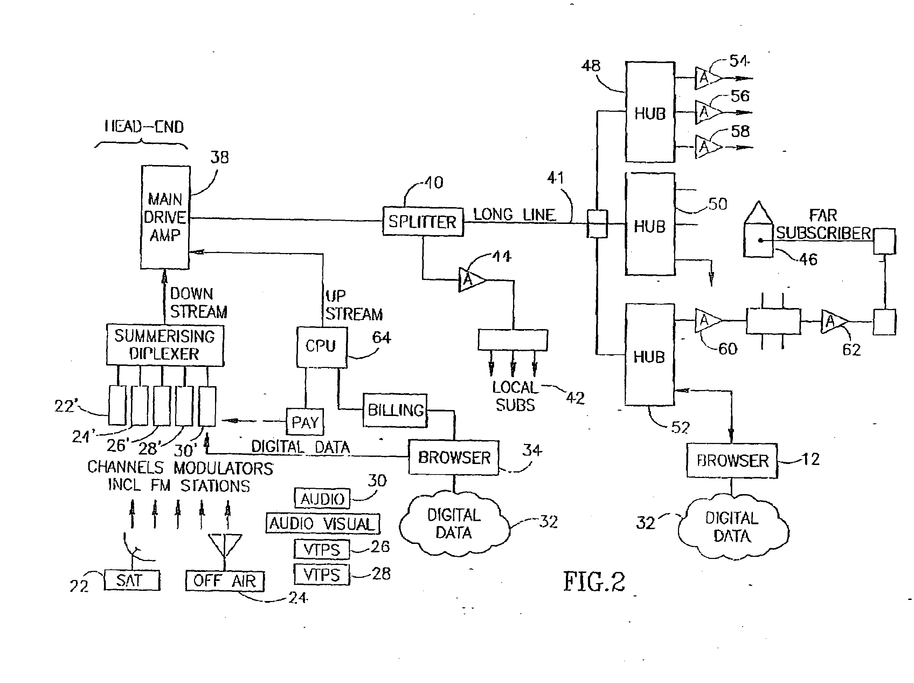

The operation of an existing CATV system is described referring to Fig. 2. Fig. 2 shows a block diagram of a standard CATV system. A plurality of information sources 22, 24, 26, 28, 30 transmit information units encoded into electrical signals to respective channel modulators 22', 24', 26', 28', 30', Following appropriate requests by a subscriber, digital data encoded into electrical signals is sent from a digital data network 32 to a data network browser 34 at the head-end 36. The plurality of signals from the channel modulators 22', 24', 26', 28', 30' are multiplexed into a broadband signal and fed downstream via a main drive amplifier 38 to a splitter 40. The splitter 40 divides the signal carried on the cable and distributes the signal downstream simultaneously to local subscribers 42 via a line amplifier 44 and to remote subscribers 46 via long line 41. Long line 41 is typically a fiber-optic cable. The signal is transported through trunk cables, local hubs 48, 50, 52, feeder (or distribution) cables, taps or multi-taps, and drop cables. According to the topography of the system one or more line amplifiers 54, 56, 58, 60, 62 are installed along the transmission path. The local hub station 52 receives directly digital data from data communication network 32 via local data network browser 62. Upstream information collected from the subscribers 42, 46, 54, 56, 58 is conveyed upstream to a CPU 64 at the head-end 36 to be used for billing purposes, payments, and for accessing a data network 32 via the head-end data network browser 34. Additional components could be connected to the units described above.

The functional spectral width of a typical CATV system is limited. The network operators have maximized the number of active TV channels for broadcasting to their customers thereby utilizing practically the entire range of frequencies available for effective information transmission. Therefore to discontinue the operation of an active channel in order to dedicate the corresponding channel to a data communication network access would be problematic and costly. An extension of the spectral width is needed to enable the insertion of additional information sources into the information mix carried by the common signal.

Having described the standard CATV system in general the various components of the CATV system and the XBCS components will now be described in further detail showing the various additions and enhancements to the components of the CATV system showing the XBCS system.

Generally, the modifications to the infrastructure of the CATV system are realized by introduction of specific new elements in tandem with the existing elements. The new elements can be introduced into the distribution plant independently of existing elements when needed. Existing components within the distribution plant are not replaced but overlaid with additional XBCS elements. The addition of specific new elements and/or the rearrangement of existing elements modify some elements such as the subscribers' home outlets and the nearest splitters to the home outlets. In some topographical areas in order to maintain an acceptable level of performance the transmission line will have to be disconnected, an XBCS new module will have to be introduced into the system, and then the line will have to be reconnected through the new module. For the purpose of clarity we be begin the description with the subscriber's home outlet making our way in reverse (upstream) direction, via the home outlet splitter, the set-top unit, the hub station, the compensation unit, and the improved cable connectors.

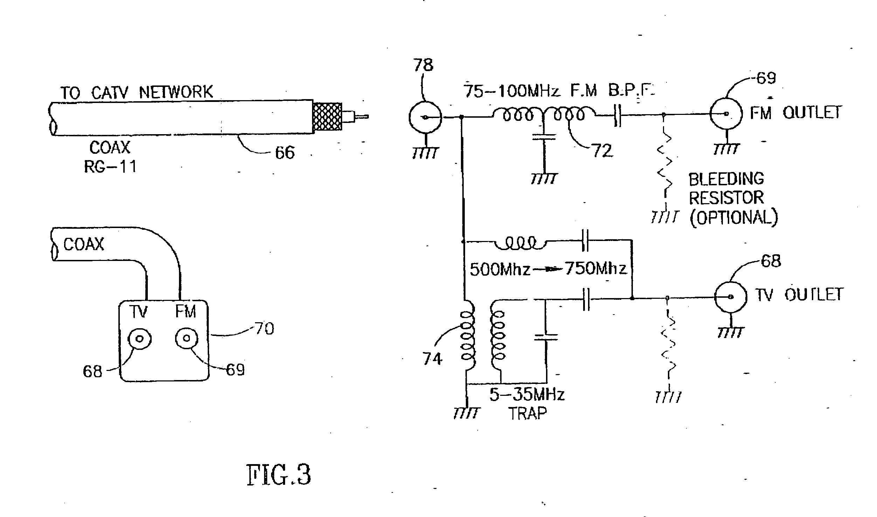

Fig. 3 illustrates the schematics of an existing CATV system subscriber home outlet. Broadband signals received as input from the CATV network are fed into the home outlet 70 through an RG-11 type coaxial cable 66 and reverse signals are fed from the outlet to the CATV network through the same path provided by the RG-11 type coaxial cable 66. The coaxial cable 66 is soldered or F-connected to the home wall outlet 70. The home wall outlet 70 provides a TV F-connector 68 or similar connector and a FM radio connector 69. The broadband signal is fed from the termination surface 78 of cable 66 to the home outlet circuitry. The FM radio signals are split from the broadband signal by a standard 75-100 MHz FM band pass filter 72 and fed into the FM outlet 69. Signals modulated above 50 MHz are fed to TV outlet 68. Signals in the 5-35 MHz range are trapped by trap 74. The home outlets have to accept the upstream return path of 5-35 MHz. Reverse signals in the 5-35 MHz transmitted from the subscriber are fed into the outlet through the TV outlet 68, and via wall outlet 70 are transmitted to the head-end.

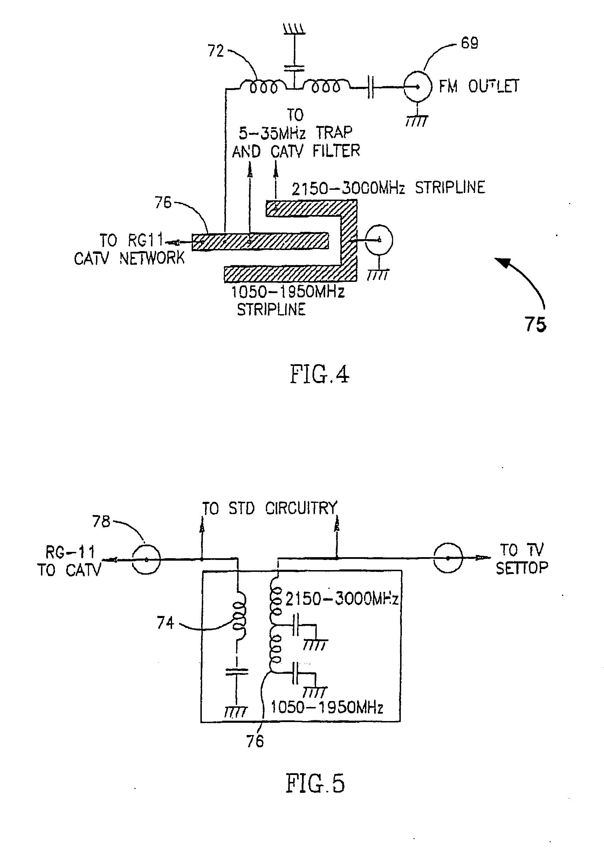

Referring now to Figs. 4 and 5 that show a schematic illustration of an XBCS CATV subscriber extended home outlet, designated 75, and the electrical circuitry of a XBCS CATV subscriber home outlet. The XBCS home outlet shown is a standard CATV home outlet that was modified in order to enable the transmission of a broadband signal having a frequency range of about 5 MHz to about 3000 MHz. An added stripline Super High Frequency (SHF) diplexer 76 is incorporated into the standard CATV system home outlet in the following manner. The standard CATV FM bandpass filter 72 and the upstream 5-35 MHz trap 74 are sandwich connected to the XBCS outlet port 78. Consequently, the modified XBCS home outlet is still provided with the full capability regarding standard CATV operations, such as the passing of the 5-35 MHz return path upstream and the passing of the 50-750 MHz to the subscriber. Additionally the outlet provides the capability of adding to the current usable bandwidth an additional operative spectral band of about 1000 MHz to about 3000 MHz. The new band is split in two by the diplexer 76 in order to provide a symmetrical downpass and an uppass of at least about 1000 MHz to each direction. The XBCS home outlet provides standard CATV signal levels of 75 dBmV for cable TV while maintaining the FM levels, and the 5-35 MHz upstream characteristics. For the about 1050-1950 MHz band and the about 2150-3000 MHz band the built in stripline filters engineering maintains 75-ohms impedance.

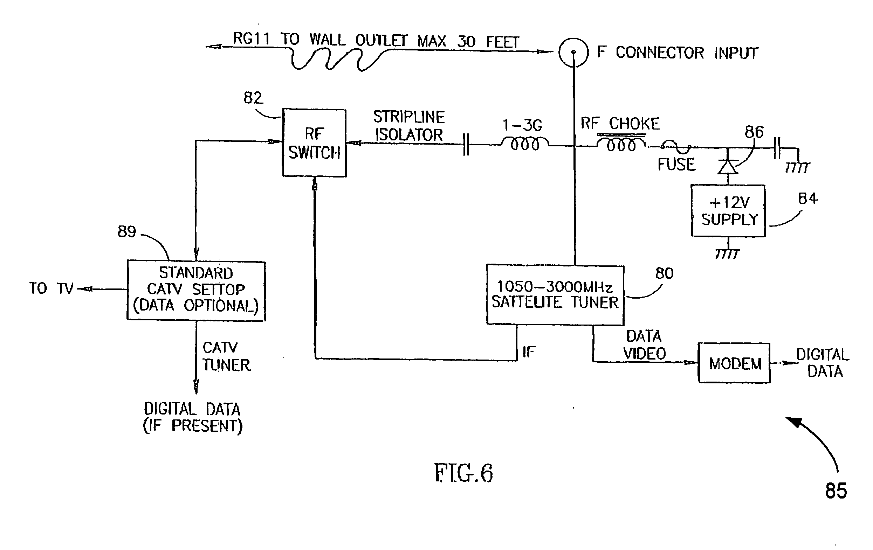

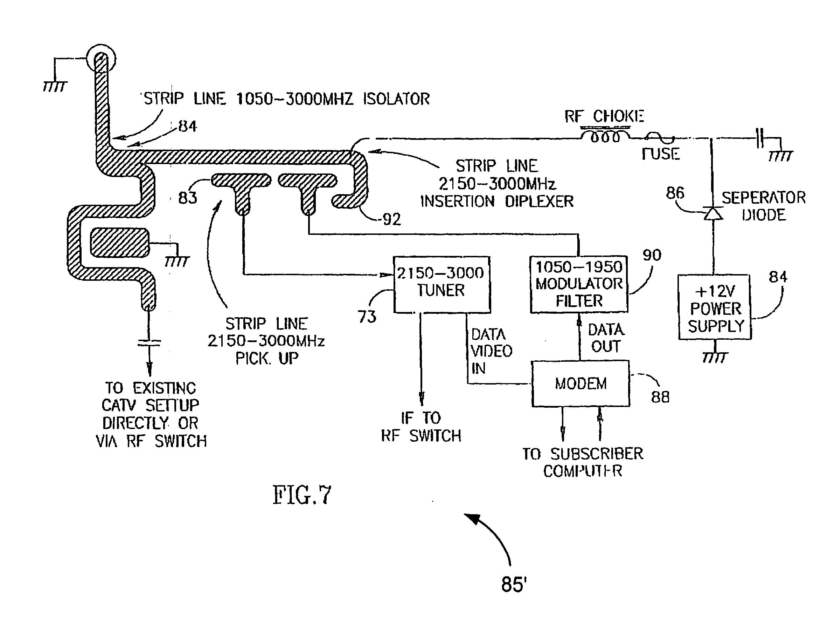

Referring now to Fig. 6 there is sown a schematic illustration of a asymmetrical XBCS CATV extended set-top, generally designated 85. When adding about 3 GHz of spectrum on top of the existing CATV bandwidth to be utilized as downstream region only, a digital satellite tuner 80 with a bandwidth 36 MHz and an IF frequency of 72 MHz is used. The tuner 80 enables control of a plurality of additional channels having data transfer rates up to about 10 Gbps. As a result, the XBCS system's performance is substantially equivalent to the performance of a very high speed Ethernet network. A RF switch 82 is used for selecting direct standard CATV operations or down conversion from the XBCS bandwidth of about 1000-3000 MHz to about 72 MHz for the Digital Broadcast Video service. The unit is supplied +12V DC 84 via a fused separation diode 88. Referring now to Fig. 7 which illustrates the difference between the symmetrical XBCS extended set top box, designated 85', and the asymmetrical XBCS extended set top box 85 of Fig. 6. A stripline filter arrangement is engineered to separate of the main streams. The stripline filter 84 isolates the standard CATV 5-750 MHz band and directs it directly or via the RF switch 82 of Fig. 6 to the standard CATV set-top 89 in use. Consequently the about 2150-3000 MHz band is picked up by the about 2150-3000 MHz stripline pickup 83 and fed to a broadband about 2150-3000 MHz 73 tuner which delivers IF of 72 MHz and decodes digital data which is fed to a two-way modem 88 downstream. The two-way modem 88 directs the upstream information from the subscribers co,mputer to a modulator exciter 90 in the about 1050-1950 MHz band whose output is collected by the about 1050-1950 MHz stripline insertion diplexer 92' feeding it back via the CATV network to the nearest hub. The types of modulation, coding, demodulation, and decoding methods will be adjusted according to the type of the CATV systems within which the proposed method is operative.

If the subscriber is not a single user within the area supplied by a specific tap but a part of commonly owned apartment house or condominium arrangement it is more than likely that the standard connection thereof will be to a passive splitter. This splitter can be an about -3dB divider or any up to times 8 divider (about -10dB). The usual length of the RG-11 cable from this splitter to the subscriber home outlet can reach up to 100 feet. Whenever an odd number of subscribers are connected to a dividing splitter a 75-ohm passive load termination is used.

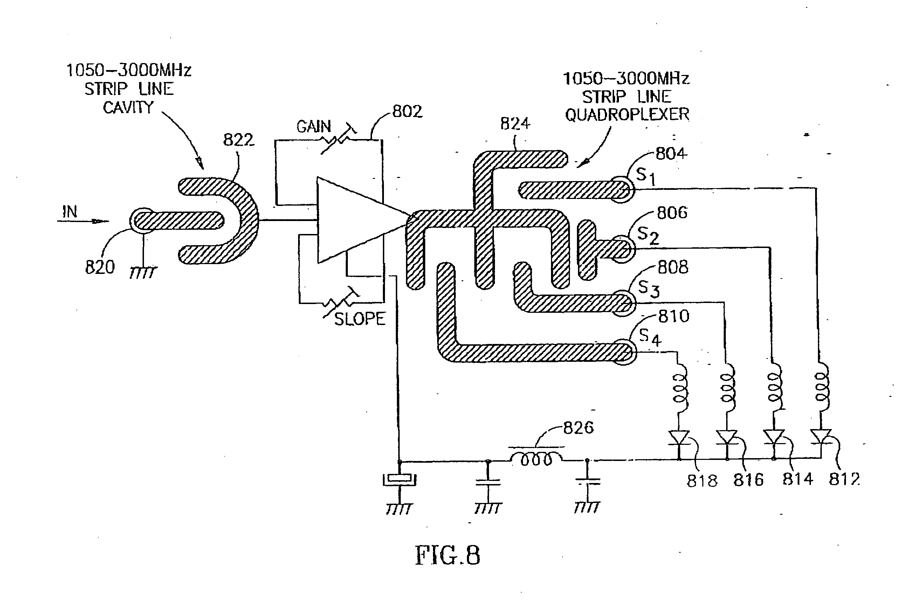

Fig. 8 illustrates the XBCS CATV four-way splitter located nearest the subscriber home outlet. The standard CATV last splitters are 5-900 MHz passive splitters. As the nearest splitter is at a distance of about 100 feet from the subscriber home outlet the about 1000-3000 MHz asymmetrical or the split symmetrical information will suffer a substantial loss due to the RG-11 characteristics. To compensate for the loss modifications are applied to the splitter. The signal is fed from the CATV network via input port 820. Filter 822 separates the 1050-3000 MHz frequency band from the signal and feeds the signal to gain and slope adjusted amplifier 802. The amplifier 802 values are calculated for driving the XBCS signal in order to overcome the losses of the RG-11 cables connected to the subscribers home outlets. The modifications of the splitter divider are connected in parallel to standard 5-900 MHz circuitry without influencing each other. Power to drive the amplifier is provided through separation diodes 812, 814, 816, 818, which are connected to all four 804, 806, 808, 810. The amplifier 82 will be performing as long as the XBCS set-top of the four subscribers connected via ports 804, 806, 808, 810 is operating. The amplified signal is divided to four signals by a 1000-3000 MHz quadroplexer 804 and fed via the output ports 804, 806, 808, and 810 to the respective subscribers.

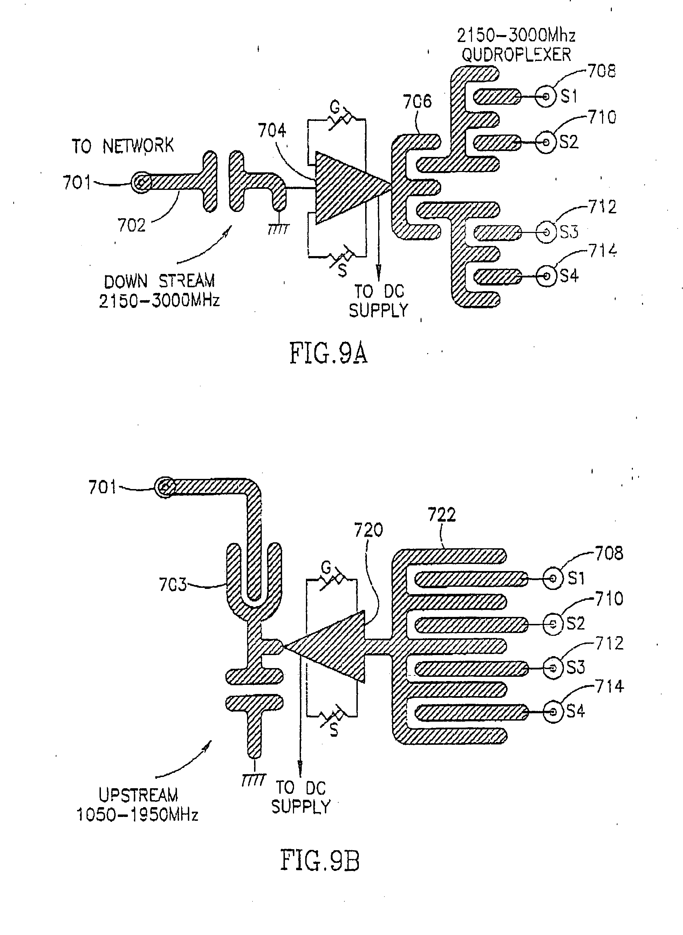

Figs. 9A, 9B show a specific example of a distributed layout of a 4-divider splitter configuration, in accordance with a preferred embodiment of the present invention. The exemplary 4-divider splitter divides the signal to four subscribers such that the subscribers are enabled upstream and downstream communication while the standard CATV feed is kept intact.

Fig. 9A illustrates a mechanical layout of the 4-divider splitter's downstream segment. The broadband signal fed from the CATV network via input port 701 is passed to filter 702. Filter 702 passes the frequencies of the broadband signal within the 2150-3000MHz downstream frequency portion to amplifier 704. The signal is suitably amplified and driven by amplifier 704 to quadroplexer 706 which splits the signal to four subscriber outlet units via output ports 708, 710, 712, 714.

Fig. 9B illustrates the mechanical layout of the 4-divider splitter's upstream segment. The four separate upstream signals that were generated by the subscribers are fed from the suitable set-top box extensions via the subscribers' home outlets to the splitter ports 708, 710, 712, and 714. The four separate signals are combined by the quadroplexer 722,and passed to upstream amplifier 720, Amplifier 720 amplifies and drives the multiplexed signal to the stripline filter 703. Filter 703 passes the 1050-1950 MHz upstream frequency portion of the combined signal via output port 701 to the CATV network.

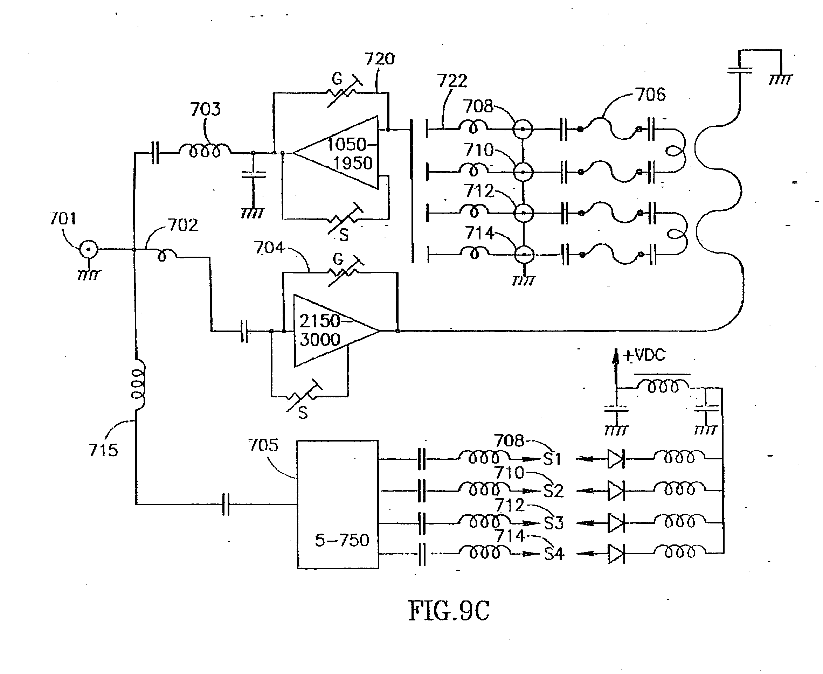

Fig. 9C shows the electrical layout of the 4-divider splitter. The broadband signal is fed from the CATV network via input port 701 to a set of filters. Filter 715 separates the 5-750 MHz conventional CATV frequency band from the broadband signal. The signal included in the separated frequency band signal is divided into four and transmitted to four respective subscribers via the splitter's output ports 708, 710, 712, and 174. Filter 702 separates signals within the 2150-3000 MHz frequency range. The separated signals are amplified by downstream amplifier 704 and divided into four parts by the interaction of circuits 706 via inductive coupling. The four exits of the respective circuits 706 are connected to the splitter's output ports 708, 710, 712, and 714. The divided signals are fed via the ports 708, 710,712, and 714 to the respective subscribers' home outlets. Upstream signals generated by the subscribers are suitably fed by the subscribers' set-top boxes to the splitter's output ports 7,08, 710,712, and 714. The signals are combined into the broadband signal by the interaction of circuits 722 via capacitive coupling and fed to upstream amplifier 720. The signal is suitably amplified by amplifier 720 and fed through filter 703. Filter 703 separates the 1050-1950 MHz upstream frequency band and feeds the filtered signals to the splitter's to the CATV network via input port 701 of the splitter.

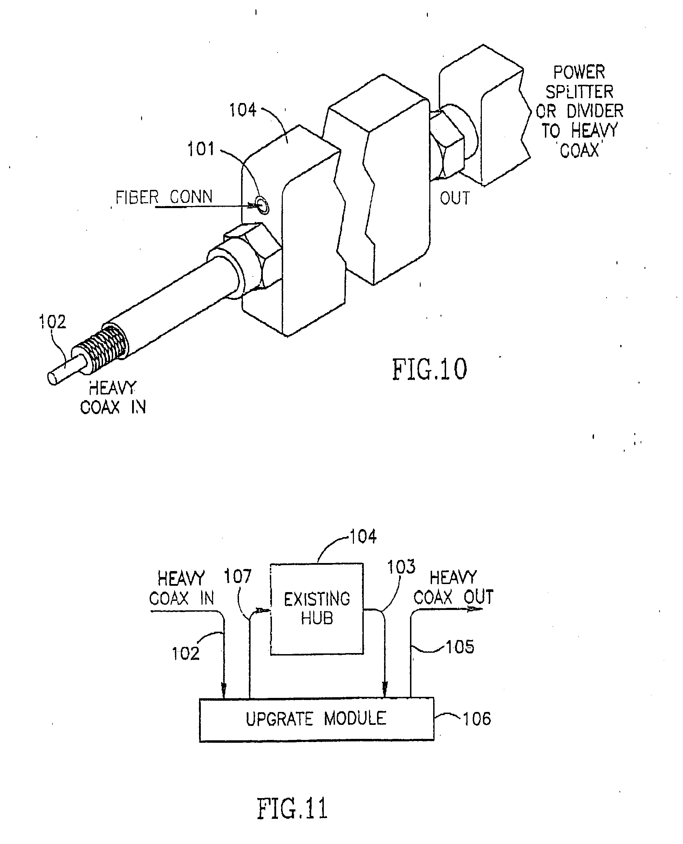

Referring to Fig. 10 which illustrates the existing mechanical connections between the CATV network and the hub station thereof. In accordance with the preferred embodiment of the present invention an important consideration regarding the installation of the XBCS is the manifest undesirability of modifying active components and particularly existing hub stations. Thus, the expansion of about 2 GHz asymmetrical or about 1000 MHz symmetrical bandwidths is achieved only by minor external connection changes. As illustrated in Figure 10, conventionally, heavy coaxial cable 102 in connected to hub station 104. The hub station 104 also includes a connection point 101 to a fiber-optic cable.

Figure 11 shows a diagram showing the mechanical introduction of a proposed hub enhancement into the XBCS hub. The introduction of an XBCS compensation module between the CATV network and the hub station enables the operation of the XBCS system and allows the transmission of high frequency signals in ranges between the about 1000MHz and the about 3000MHz. The XBCS module 106 is introduced to the ordinary CATV system. An asymmetrical or symmetrical XBCS module is to be added to the CATV system in the following manner. The heavy coaxial cable 102 is disconnected from the existing hub 104 and reconnected to the XBCS hub module 106 input while the parallel XBCS hub module 106 input free coaxial cable 107 is connected to the hub 104 input connection point. Similarly the heavy coaxial cable 105 is disconnected from the hub 104 and reconnected to the XBCS hub module 106 output while the parallel XBCS hub module 106 output free coaxial cable 103 is connected to the hub output.

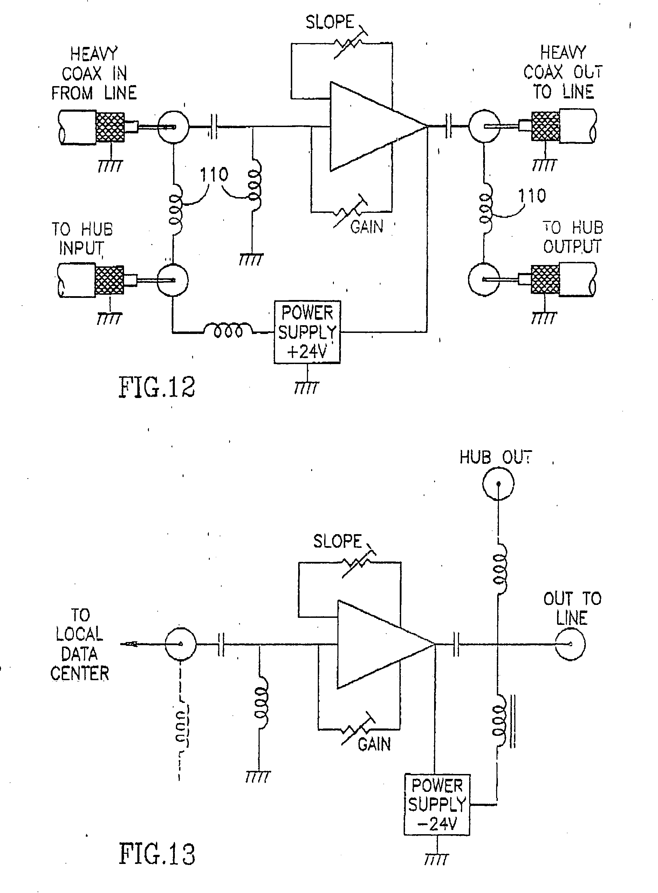

Figure 12 shows a combined schematic block diagram and a general view illustrating the new hub module of the XBCS system. The XBCS hub module can operate in an asymmetrical mode. The drawing illustrates the asymmetrical XBCS hub compensation module. The module adds gain and slope to losses of the about 1000-3000 MHz bandwidth, which in the asymmetrical mode is entirely dedicated to the transmission of the additional downstream signal. The change in or to the standard 5-35 MHz, and the standard 48-750 MHz is negligible (less than 1 dB) as the about 1000-3000 MHz traps 110 is connected in series to the "IN" and "OUT" hub connectors. In Fig. 13 the asymmetrical XBCS hub module for the local hub data insertion is shown. No changes in the input to the hub are necessary since only the channels mapping and 3-35 MHz upstream towards the head-end is being fed. The' output from the hub is disconnected and inserted via the new module:

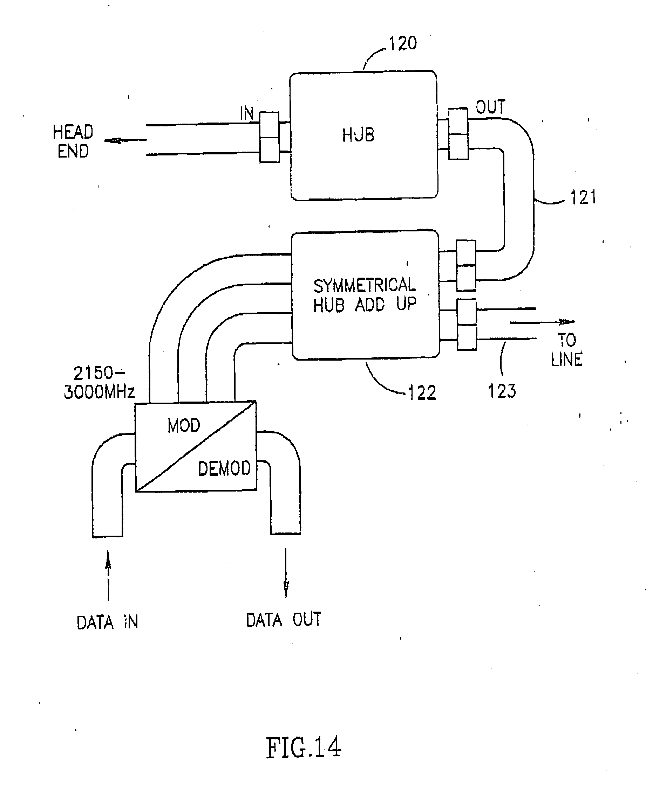

Figure 14 shows a general view illustrating the mechanical introduction of a new symmetrical hub module into a typical CATV hub. The heavy coax connector to the hub is not modified in respect to the standard CATV hub. The heavy coaxial cable output 121 from the hub 120 is reconnected via the XBCS hub 122 to the XBCS hub 122 output 123.' In XBCS symmetrical operation data is fed in the upstream direction with same bandwidth as the downstream. Therefore the XBCS symmetrical hub unit structure and operation are different from the asymmetrical which is eventually adding about 2000 MHz in bandwidth to the downstream direction. The about 1050-1950 MHz added band . is upstream data collected from the subscribers and fed to the data routers connected via fiber optics to the hub. The same data routers are feeding the about 2150-3000 MHz bandwidth with modulators exciters for data loads downstream to the subscribers.

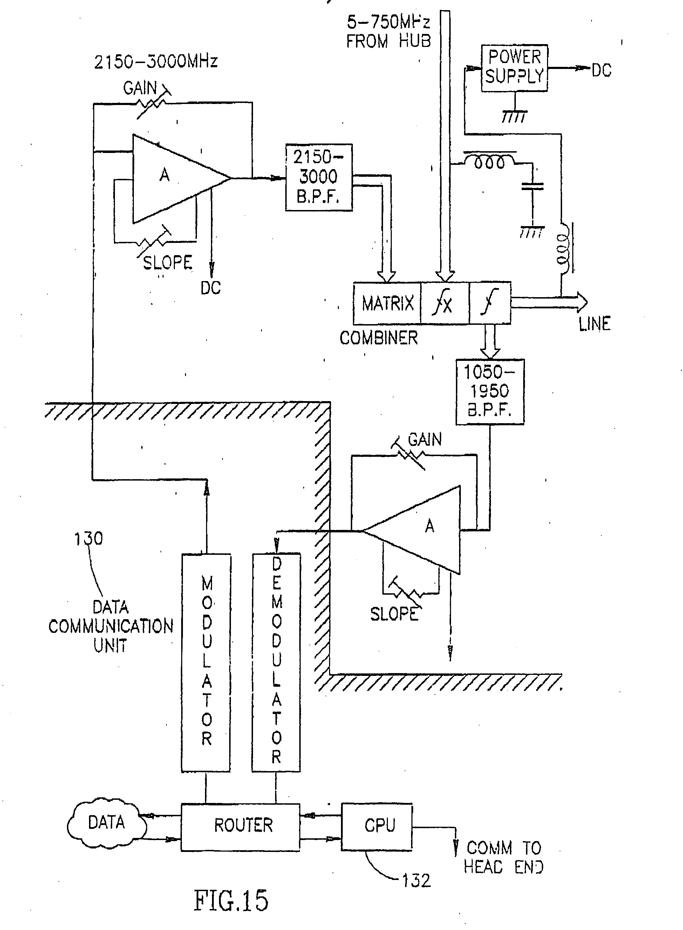

Fig. 15 shows the XBCS symmetrical hub unit circuitry including the XBCS data communication unit. A typical hub assembly feeds a community of about 2000 neighboring subscribers. It is a common practice to interconnect the hub assembly to data supplying routers and peripherals. The XBCS data communication unit 130 is a duplex receiver/transmitter having a speed of at least 800 Mbps for each direction in parallel. Types of data modulation and encoding, demodulation and decoding are given to the CATV operator's decisions. The symmetrical XBCS provides a carrier platform of about 2000 MHz to be used as desired. The spectral density and location for each of the about 2000 hub subscribers is controlled by a CPU 132, which is locally controlled when installed in the head-end assembly or remotely controlled from the head-end when installed on the hub station. The XBCS system uniquely utilizes the already laid coaxial cables in order to supply in duplex high-density high-speed data from the hub to the subscribers. The XBCS system is also unique in using the already existing infrastructure devices and the additions and modifications installed to secure and control the bandwidth expansion to the about 3 GHz bandwidth. In a CATV system enhanced with XBCS units all the "IN" and "OUT" connections belonging to any active line distribution device such as bridging amplifiers, and line amplifiers or belonging to passive line power splitters have to be disconnected and reconnected via XBCS symmetrical or asymmetrical compensation unit.

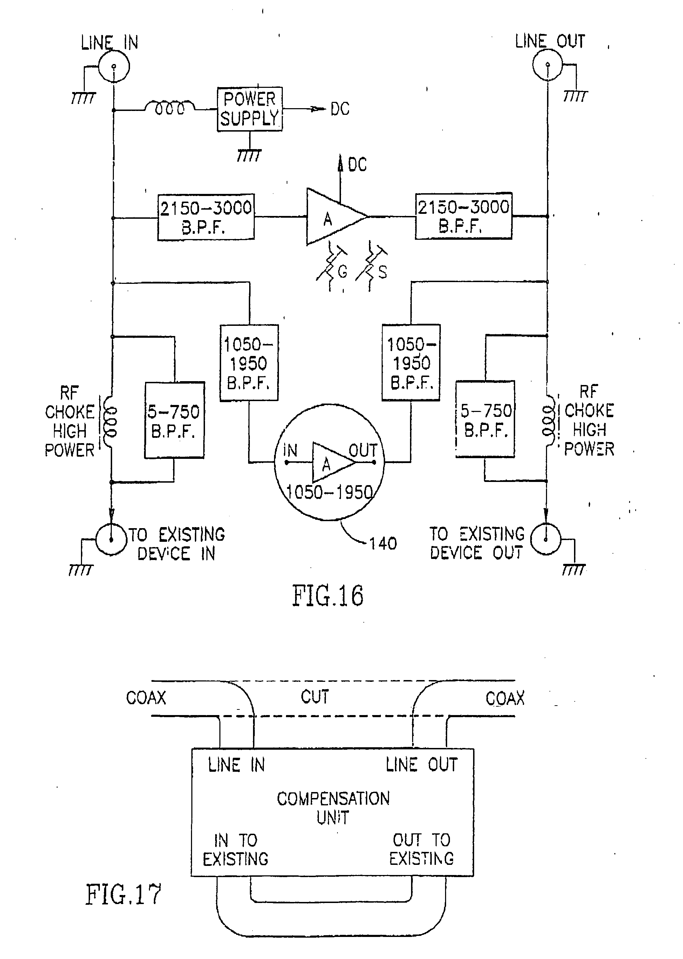

Referring to Fig. 16 the XBCS compensation unit can be connected as a symmetrical or as an asymmetrical unit. The standard XBCS compensation unit is engineered in such a way as to pass all the existing CATV signals of 5-750 MHz including the 50-60 Hz line power distribution links. The unit has two amplification segments. The about 2150-3000 MHz segment is always connected as a downstream adder. Where symmetrical operation is desired the about 1050-1950 MHz amplifier module 140 can be connected in reverse to serve as an upstream amplifier.

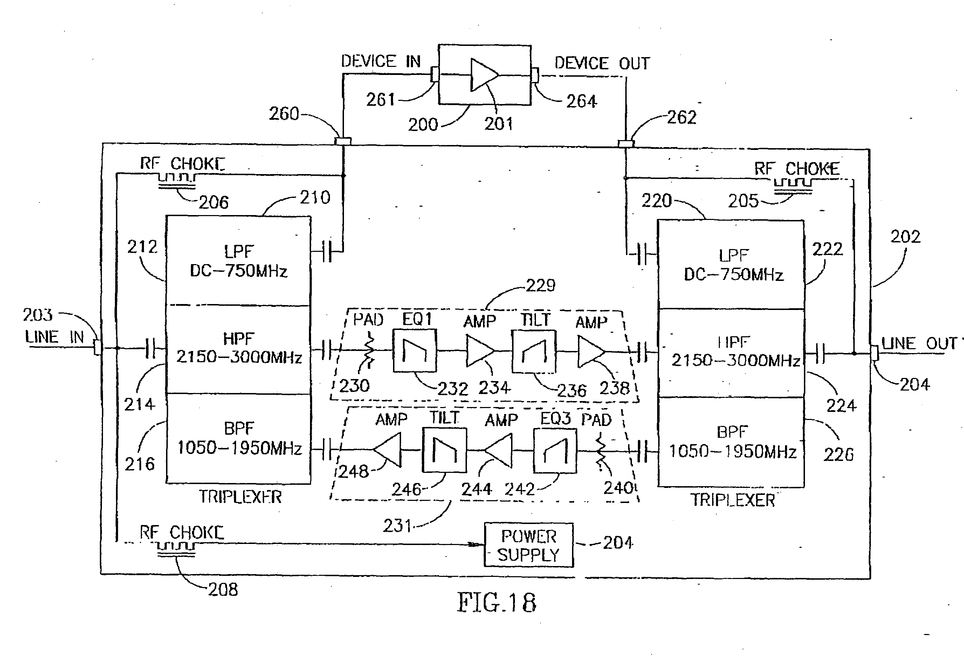

Figure 17 shows a graphical representation of the introduction of the proposed compensation unit as a standalone signal booster into the CATV system. The XBCS compensation unit can be used as a standalone unit whenever it is needed for refreshing the signal and overcoming line drop losses due to infrastructure topography, such as transmission of the signal in overlong cables. The unit rejuvenates the XBCS signal at existing taps, connectors, splitters, and the like. The existing cable is disconnected at designated points, which were found by calculation and the XBCS compensation unit is introduced into the system.

Referring to Fig. 18 which is schematic block diagram illustrative of the XBCS compensation unit of Fig. 17. Compensation unit 202 is coupled to line distribution device 200 via two connection points: "IN" connection point 260, and "OUT" connection point 262. "IN" connection point 261 of device 200 is coupled to "IN" connection point of compensation unit 202 via "IN" connection point 261. "OUT" connection point 264 of device 200 is coupled to "OUT" connection point 262 of compensation unit 202. Line distribution device 200 contains a typical CATV amplifier unit 201. For example unit 201 could be a bridging amplifier, a component that typically provides service into the distribution or feeder systems. The compensation unit 202 could be connected to any other typical CATV line distribution devices, such as line amplifiers or signal splitters. The compensation unit 202 comprises RF chokes 205, 206, 208, multiplexer filter sections 210, 220, downstream amplification section 229, upstream amplification section 231, and power supply 204. In the compensation unit 202 the RF signal is to be processed in a RF device. Therefore, the AC power signal must be separated from the RF signal in the compensation unit 202. A RF choke is utilized to separate the single-phase AC power signal from the broadband RF signals. The capacitor blocks AC power from the frequency selective devices. After passing the device, the AC power is recombined with the broadband signal, by utilizing a'second RF choke. In the compensation unit 202 RF chokes 205, 206, 208 are operative in separating and recombining the line power frequencies, necessary for the operation of amplifiers and other devices along the transmission path, from the RF signal transmitted through the line. Multiplexer filter sections 210, 220 are combinations of frequency selective devices, which operate at three different ranges of frequencies. Multiplexer filter sections 210, 220 consist of three frequency selective circuits categorized by the location of their passband. Downstream amplification section 229 comprises pad 230, gain equalizer 232, amplifier 234, tilt equalizer 236, and amplifier 238. Upstream amplification section 231 comprises pad 240, gain equalizer 242, amplifier 244, tilt equalizer 246, and amplifier 248. The function of amplifiers 234, 238, 244, 248 is to increase the amplitude or the power of the signal within a selected frequency range. In order to obtain any desired amplification the amplifiers should be suitably connected in sequence. Thus, the basic unit is a single-stage downstream amplifier 234, 238, and the single-stage upstream amplifier 244, 248 consist of the active device and all the associated components that accompany such a stage. Downstream pad 230 and upstream pad 240 are adjustable resistance networks utilized for the tuning of the respective amplification sections thereof. Downstream equalizers 232, 236 and upstream equalizers 242, 246 allow control of the gain, slope and amplitude of the signal in order to correct cable attenuation slope over frequency introduced into the signal by the cable. Multiplexer filter segment 210 comprises low pass filter (LPF) 212, high pass filter (HPF) 214, and band pass filter (BPF) 216. Multiplexer filter segment 220 comprises low pass filter (LPF) 222, high pass filter (HPF) 224, and band pass filter (BPF) 226. The filters 212, 214, 216, 222, 224, 226 are predetermined arrangements of electronic components that allow only specific frequencies lying within a predefined range, or a band of frequencies to pass, and block all the other frequencies. In the preferred embodiment of the present invention LPF 212 and LPF 222 are designed to pass frequencies in the about 5 -750 MHz range. The about 5-750 MHz range includes the signal components impressed with information to be transferred within the conventional CATV channels in the downstream/upstream direction, i.e., from/to the head-end to/from the subscribers. Similarly, HPF 214 and HPF 224 pass the about 2150-3000 MHz range of frequency components to transmit information impressed therein in the downstream direction from the head-end to the subscribers. In the preferred embodiment of the present invention BPF 216 and BPF 226 pass the about 1050-1950 MHz frequency band operative in holding information impressed therein, which is transmitted upstream from the subscribers to the head-end as a reverse signal. The broadband signal transmitted from the head-end in the downstream direction is fed to the compensation unit 202 via "IN" connection 203. The line power elements of the signal are separated by RF choke 206, 208. The signal is fed to multiplexer filter section 210. In order to pass the 5-750 MHz band of frequencies unmodified, LPF 212 extracts the range of frequency components in the 5-750 MHz range and transfers the components to bridging amplifier 201 contained in the line distribution device 200. The signal components are suitably processed by bridging amplifier 201 and LPF 222 and are fed via connection point 204 to be transmitted to the subscribers. HPF 214 extracts the band of frequency components in the 2150-3000 MHz range and feeds the components to downstream amplification section 229. Downstream pad 230 is an adjustable resistance network operative in the suitable tuning of the components within the section 229. The signal is processed and amplified appropriately by amplification section 229 and subsequent to filtering by HPF 224 is fed via connection point 204 to be transmitted to the subscriber downstream. BPF 226 extracts the band of frequency components in the about 1050-1950 MHz range and feeds the frequency components to upstream amplification section 231. Upstream pad 240 is an adjustable resistance network operative in the suitable tuning of the components within the section 231. The signal is processed and amplified appropriately by amplification section 231 and subsequent to filtering by BPF is fed via connection point 203 to be transmitted to the head-end. Note should be taken that in other embodiment of the present invention the about 1050-1950 MHz band of frequencies could be utilized as an additional downstream path. It will be clear to one with skill in the art that in the above mentioned different embodiment the processing sequence of the amplification section 231 will have to be operatively reversed in order to enable the proper processing of the RF signal.

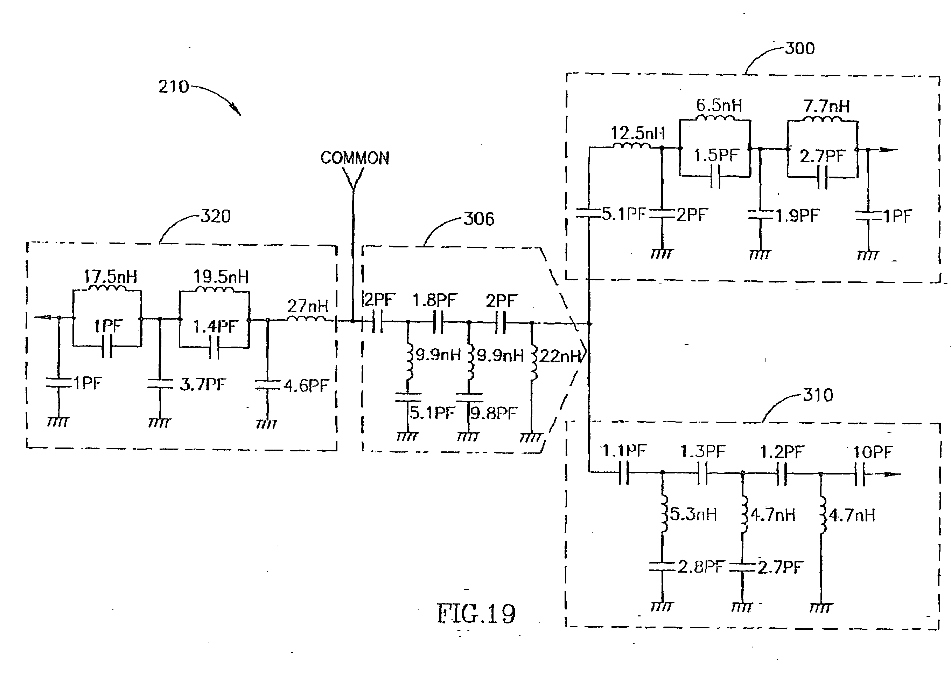

Referring to Fig. 19 that shows a schematic block diagram of the filter section 210 and 220 of Fig. 18. The composition and the functions of filter section 210 and of filter section 220 are substantially identical. Thus, only filter section 210 is illustrated in the drawing. Filter section 210 comprises BPF segment 300, BPF section 306, HPF segment 310, and LPF segment 320. The specific component values on the block diagram reflect the respective bandwidths designed to be passed and or to be blocked by the filter segments within which the components are included. It will be easily perceived by one with ordinary skill in the art that the different filter segments could be set to any bandwidth within the about 1000-3000 MHz band by changing the suitable component values. The type of the amplifier utilized within the system of the present invention could be of a wide variety of different products. For example an off-shelf product may be used as the standard amplifier to be utilized in the compensation units. One such amplifier is the "Linear CATV Amplifier Type RF-2317" manufactured by the RF Micro-Devices, Inc. of Greensboro, NC, USA. Other substantially similar products with substantially similar attributes and features may be implemented.

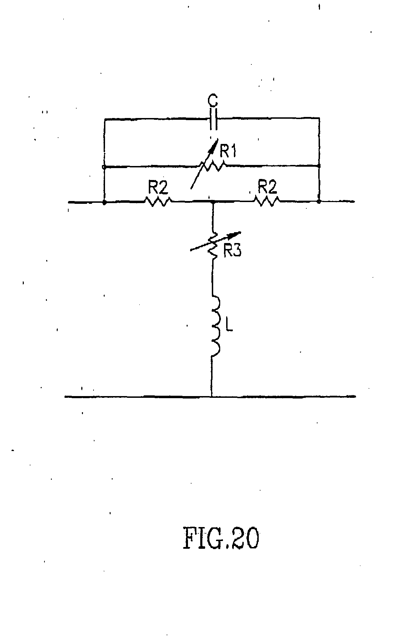

Fig. 20 shows a schematic block diagram of the slope amplitude equalizer circuit implemented in the compensation unit of figure 18. The equalizer provides amplitude and slope compensation allowing for the equalization of effects contributed by cable runs and components inherent in the existing design. The amplifiers within the system are used to compensate for the attenuation of the signal levels. However, even after amplification, the higher frequencies are at lower levels than the lower frequencies. Therefore, the included equalizer circuits attenuate lower frequencies of the cable signal to provide relatively flat signal levels. The equalizer circuit for the reverse direction also compensate reverse signals, as necessary, so that relatively flat response of the reverse signal levels are provided to the head-end.

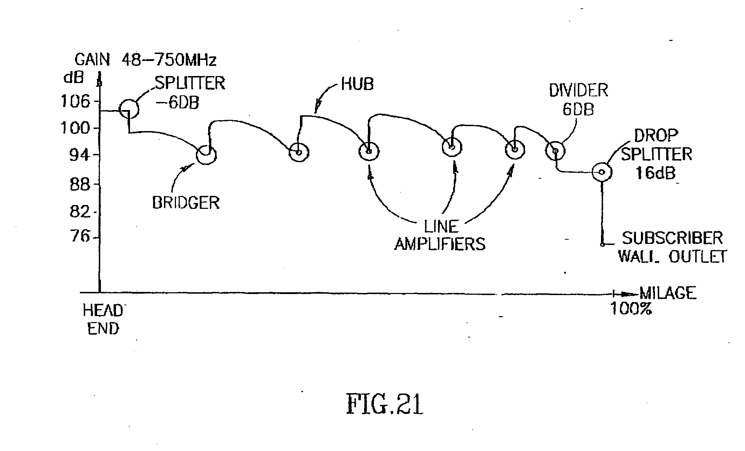

Fig. 21 graphically illustrates an exemplary transmission path including diverse CATV components from the head-end to the subscriber in a standard CATV system. The CATV system parameters are pre-calculated and the entire CATV system infrastructure is equipped to fit the various topographical and local environments in order to achieve the transmission of a signal with the suitable characteristics to all the subscribers with a minimum distortion and noise. The signal tree combination is a typical pattern of all and any CATV system. Various software systems operative in calculating the optimal system values are available that take into account the various parameters of the heavy coaxial, cables in use, the active elements chosen, the passive splitters, and the drop sections up to the subscriber. All those parameters when adjusted to given lengths of the interconnection can be pre-calculated and create the signal tree assignment. In the standard CATV systems the signal tree assignment values are pre-calculated for the 48-750 MHz bandwidth only.

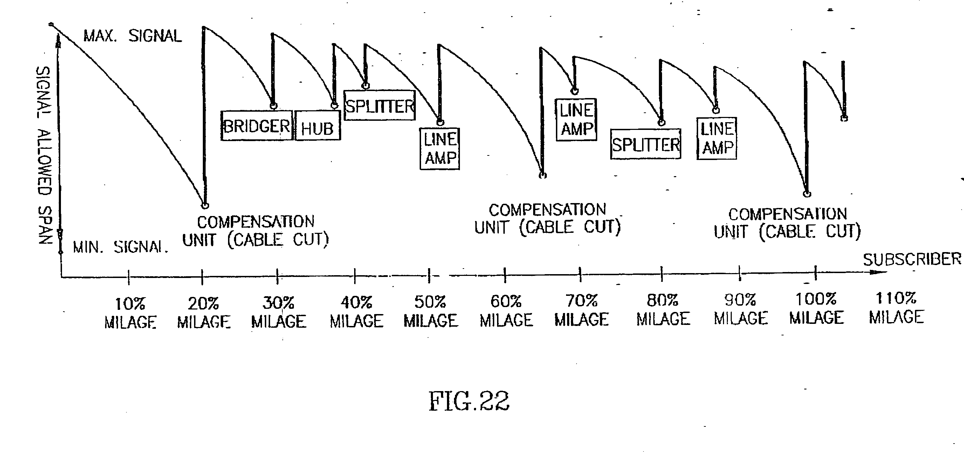

Fig. 22 graphically illustrates an exemplary transmission path to the subscriber in the XBCS system. XBCS system pre-calculation is taking care of drop losses in the heady coaxial cables and an XBCS compensation unit is installed whenever needed. Any other preinstalled devices will carry a new XBCS unit in such a way that the XBCS signal practically never drops below the specifically predefined level. The method and system of present invention proposes to substantially extend the usable bandwidth of a cable television communication network.

The signal can be modulated across a frequency range with an upper limit of about 10GHz. As a result of amplifier dynamics, the conventional CATV cable connector assemblies effect spectral response decay above frequencies of about 1 GHz. In order to enable transmission of signals within the substantially higher bandwidth limits and having a substantially correct spectral response, the present invention proposes an improvement in the existing cable connector assemblies. The correct spectral response will be maintained by the attachment of specific adapter units.

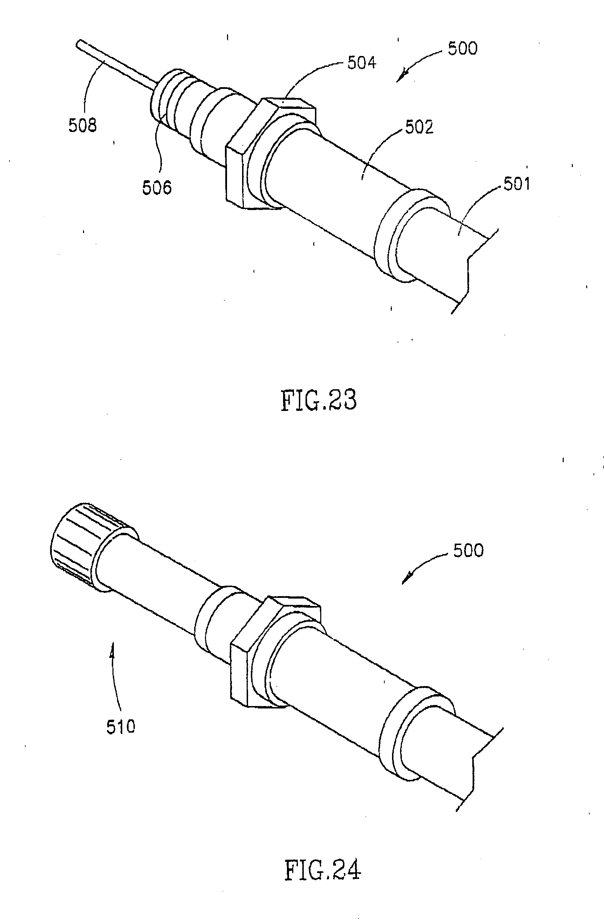

Referring to Fig. 23 that illustrates the existing cable connector assemblies employed in a conventional CATV system. The standard cable connector assembly 500 contains body 502, threaded fastener 504, thread 506, cable 501, and inner conductor 508. Cable connector assemblies of this type effect spectral response decay when passing signals, which were modulated into frequency bands lying across the GHz range. Fig. 24 shows the proposed solution to the problem of the spectral response decay. In the preferred embodiment a type N RF coaxial adapter 510 is fitted to the standard cable connector 500. The attachment of the adapter 510 to the cable connector 500 is accomplished by the cutting of inner conductor 508 of Fig. 24 and by the suitable fastening of conductor 508 of Fig. 24 to adapter 510.

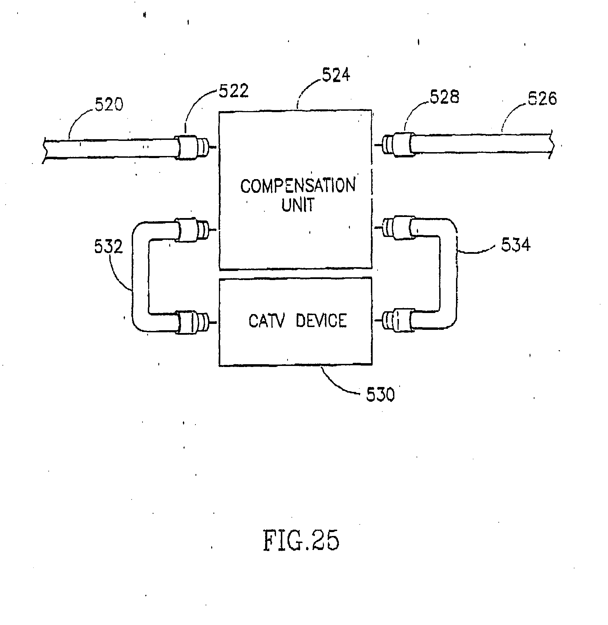

Fig. 25 shows the method of introducing the compensation unit 506 into the signal path within the proposed system. Cable connector assembly 520 with attached type N adapter 522 is coupled as line "IN" to compensation unit 524. Cable connector 526 with attached type N connector 528 is coupled to compensation unit 524 as line "OUT". The compensation unit 524 is connected to the CATV device 530 via standard cable connector assemblies 532, and 534. Female or Male Type N connectors are capable of passing signals through the cable television system, utilizing a frequency range with an upper limit of about 10GHz, while maintaining a proper spectral response. The type of the type N adapter utilized within the system of the present invention could be of a wide variety of different products. For example an off-shelf product may be attached to the standard cable, connectors. One such product is the "N-series RF Coaxial Connector" manufactured by the Gilbert Engineering Co. of Glendale, Arizona, USA. Other substantially similar products with substantially, similar attributes may be implemented. Female or Male Type'F connectors are capable of passing signals through the cable television system, utilizing a frequency range with an upper limit of about 10GHz, while still maintaining a proper characteristics of the signals.

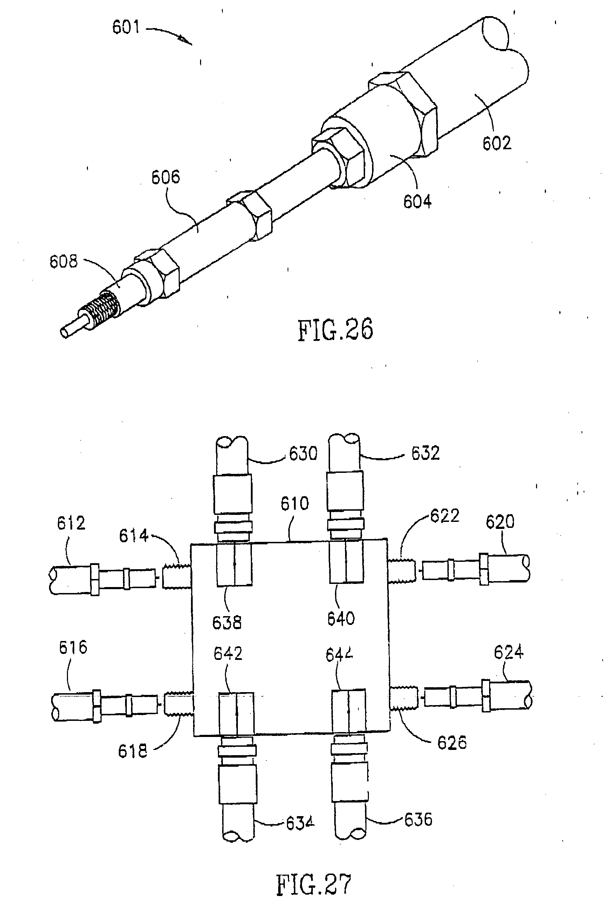

Fig. 26 illustrates the adaptation of a standard semi-rigid connector assembly the system. The adaptation is done by the attachment of a female-to-female center conductor adapter known as slice cable connector. The center conductor to the F connector outlet (male or female as needed) is mounted to the open end of the slice adapter. The connector assembly 601 includes semi-rigid cable 602, semi-rigid connector body 604, center conductor to F (male or female) 608, and center conductor adapter 606.

Fig. 27 shows the method of introducing the compensation unit 610 into the signal path within the proposed system. Cable connector assemblies 612, 616, 622, 624 having center conductor adapters attached are coupled to F type female ports 614, 618, 622 and 624 respectively. In addition, standard concentric cable connectors 630, 632, 634, 636 are coupled to ports 638, 640, 642, 636 of compensation unit 610 respectively.

It will be apparent to one skilled in the art that the above description facilitates a thorough understanding of the present invention and should not be construed as limiting to other possible embodiments and alternative uses that could be contemplated without departing from the scope of the appended claims. It will be clear to one skilled in the art that the foregoing description is merely exemplary. In other embodiments of the present invention additional components could be used or the detailed components could be replaced by functionally similar units without significantly depart from the underlying scope of the present invention. The scope of the proposed method and system should be limited only by the scope of the attached claims. While the present invention is described in the context of a fully operational communication network, those skilled in the art will appreciate that the present invention is fully capable of being applied in a variety of forms and the method and system applies regardless of the particular type of network configuration utilized. In view of the above description of the preferred embodiment of the present invention, many modifications and variations of the disclosed embodiment will be readily appreciated by those with skill in the art. It is therefore to be understood that within the scope of the appended claims the invention may be practiced otherwise that specifically described above.

## Claims

1. A system for extending the transmission bandwidth of a Cable Television (CATV) communication network in two-way across an enhanced range of frequencies, the network comprising a head end unit (36), at least one hub or node (48, 50, 52) connected to the head end unit (36), a plurality of home outlets (70) connected to the at least one hub or node via cables and a plurality of set top boxes (89), the enhanced range of frequencies comprising a frequency range already in use by the communication network for existing channels (10,12) and an extended frequency range including at least a subset of a frequency band of 1-3GHZ (21) for additional channels, the system comprising:
a plurality of compensation units (202) having input and output ports (203, 204) distributed at predetermined locations within the network for refreshing and maintaining the characteristics of the extended frequency range to overcome line drop losses associated with the extended frequency range due to network infrastructure topography, each compensation unit comprises a first frequency selective circuit (210) for selecting the extended frequency range in a first direction of said communication network and a second frequency selective circuit (220) for selecting the extended frequency range in a second direction of said communication network and a first amplifying circuit (229) for amplifying the selected extended frequency range in a first direction of said communication network and a second amplifying circuit (231) for amplifying the selected extended frequency range in a second direction of said communication network, said first and said second amplifying circuits comprising one or more equalizers (232, 236, 242, 246), which allow control of gain, slope, and/or amplitude of the selected extended frequency range in said first or said second direction of said communication network respectively to correct cable attenuation slope over frequency introduced into the selected extended frequency range, low-pass filters (212, 222) to provide signals in said frequency range already in use to a line distribution device (200), a power supply unit (204) to supply power to said amplifying circuits and a choke (208) to extract AC power from said input port (203) to provide power to said power supply (204);
an extended home outlet unit (75) comprising a filtering circuit for separating the extended frequency range from the frequency range already in use; and
an extended set-top box (85, 85') including a tuner (80) for controlling the additional channels in order to enable the user to interact with the additional channels; whereby enabling transmission of data at an extended range of frequencies and at substantially higher data rates.

2. The system of claim 1 wherein the communication network is a cable television system utilizing a plurality of transmission channels and distributing audio, video, text, analog, and digital information.

3. The system according to claims 1 wherein the extended frequency range comprises frequencies between about 1 GHz to about 3 GHz.

4. The system of claim 1 wherein the extended frequency ranges comprises upstream and downstream.

5. The system of claim 1 further comprising a hub enhancement module connected to the at least one hub or node for adding gain and slope to losses to the extended frequency range.

6. The system of claim 5 wherein the hub enhancement module further comprises a data communication unit, the data communication unit comprises a duplex receiver or transmitter for communicating data across the extended frequency range.

7. The system of claim 6 wherein the data communication unit comprises:
a receiver-transmitter for receiving data from a data communication network and for transmitting data to the data communication network;
a demodulator-modulator for encoding the data; and
a data router for directing the data to the data communication network and for directing the data to a central processing unit for processing.

8. The system of claim 6 wherein the hub module further comprises a multiplexer for combing a signal generated by the head end with data transmitted from the data communication unit.

9. The system of claim 1 further comprising an enhanced cable connector assembly comprising a coaxial adapter fitted to a standard cable connector for allowing the transmission of a signal modulated across the extended frequency range.

10. The system of claim 1 wherein each compensation unit further comprises a filter for separating between at least one upstream and downstream channel.

11. The system of claim 1 wherein the compensation frequency selective circuit is a single stage multiplexer for separating the enhanced range of frequency to the frequency range already in use, an extended downstream frequency range and an extended upstream frequency range.

12. The system according to claim 1 wherein the amplifying circuit of the compensation unit comprises a downstream signal amplifier and an upstream signal amplifier.

13. The system of claim 1 wherein the compensation unit further comprises:
an input connection for receiving a downstream signal and for transmitting an upstream signal;
an equalizer circuit coupled to an output connection of the frequency selective circuit for attenuating lower frequencies of downstream and upstream signals; and
at least one output connection for providing the downstream signal after being processed by the frequency selective circuit, the equalizer circuit, and the amplifying circuit, and for receiving the upstream signal.

14. The system of claim 13 wherein the compensation unit amplifying circuit is coupled to the output of the equalizer circuit for the amplification of the downstream signal and the upstream signal.

15. The system of claim 13 wherein the compensation unit further comprises a communication network line distribution unit coupled to the output connection of the compensation unit for receiving the downstream signal, the line distribution unit having an output connection for providing the downstream signal and the upstream signal.

16. The system of claim 1 further comprising an enhanced home splitter unit, the enhanced home splitter unit comprises a band divider for splitting the enhanced frequency range to the extended frequency range and the frequency range already in use and an amplifier for compensating for the losses in the extended frequency range.

17. The system of claim 1 wherein the compensation unit is connected to the communication network as a standalone unit.

18. The system of claim 1 wherein the compensation unit supports two-way symmetrical transmission of signals in the extended frequency range.

19. The system of claim 1 wherein the compensation unit supports two-way asymmetrical transmission of signals in the extended frequency range.

20. The system of claim 5 wherein the hub enhancement module is connected to the communication network as a symmetrical device to support two-way symmetrical transmission of signals in the extended frequency range.

21. The system of claim 5 wherein the hub enhancement module is connected to the communication network as an asymmetrical device to support two-way asymmetrical transmission of signals in the extended frequency range.

22. The system of claim 16 wherein the enhanced home splitter unit supports two-way symmetrical transmission of signals in the frequency range already in use and the extended frequency range.

23. The system of claim 16 wherein the enhanced home splitter unit supports two-way asymmetrical transmission of signals in the frequency range already in use and the extended frequency range.

24. A method for expanding the operational bandwidth of a Cable Television (CATV) communication network utilizing a communication media infrastructure for the transmission of a broadband signal from a transmission center via diverse electronic components operative in the preservation of the transmitted signal to a plurality of users, and from the plurality of users via the communication media and the diverse electronic components to the transmission center, the broadband signal representing information units received from and sent to external information sources, the information units encoded into modulated electronic signals multiplexed into the broadband signal, the extended frequency range including at least a subset of a frequency band of 1-3GHZ, the method comprising:
combining signals representative of the information received from the information sources into a combined broadband signal modulated across an extended frequency range;
superimposing signals representative of information units received from additional information sources onto the broadband signal; and
modulating and transmitting the combined broadband signal across the extended frequency range to a plurality of users or to a transmission center;
separately amplifying the broadband signal to said plurality of users and from said plurality of users to compensate for line drop losses due to network infrastructure topography;
separately adding gain and slope to the broadband signal to said plurality of users and from said plurality of users to compensate for signal loss;
separately filtering the broadband signal to said plurality of users and from said plurality of users to divide the broadband signal according to predefined frequency regions and according to predefined parameters relating to signal content type and direction of the broadband signal; and
tuning the divided signal for controlling said division of the divided signal into predefined frequency regions;
providing a signal in a frequency range already in use to a distribution unit via low-pass filters; and
extracting by a choke AC power to a power supply for supplying power to amplifying circuits;
whereby utilizing a standard transmission medium previously operating in a significantly narrower bandwidth for transmission in the extended frequency range.

25. The system according to claim 1 wherein the extended set-top box is connected to a communication network as a symmetrical device to support two-way symmetrical transmission of signals in the extended frequency range.

26. The system according to claim 1 wherein the extended set-top box is connected to a communication network as an asymmetrical unit to support two-way asymmetrical transmission of signals in the extended frequency range.

27. A compensation unit (202) having input and output ports (203, 204) to extend the transmission bandwidth of a Cable Television (CATV) communication network across an enhanced range of frequencies including a frequency range already in use by the CATV communication network for existing channels (10,12) and an extended frequency range including at least a subset of a frequency band of 1-3GHZ (21) for additional channels, the compensation unit comprising:
a first amplifying circuit (229) for amplifying signals of a first selected frequency range (19) of said extended frequency range in a first direction of said communication network and a second amplifying circuit (231) for amplifying signals of a second selected frequency range (20) of said extended frequency range in a second direction of said communication network, said amplifying circuits comprising one or more equalizers (232, 236, 242, 246), which allow control of gain, slope, and/or amplitude of the selected frequency range to correct cable attenuation slope over frequency introduced into the selected frequency range;
a first frequency selective circuit (210) to receive from said communication network signals of said selected frequency range and signals of the frequency range already in use from a first direction of said communication network and a second frequency selective circuit (220) to receive from said communication network signals of said selected frequency range and signals of the range already in use from a second direction of said communication network, to selectively transfer the signals of the selected frequency range of said first or said second direction of said communication network to said first or said second amplifying circuit respectively, and to transfer back to said network the amplified signals and the signals of the frequency range already in use
low-pass filters (212, 222) to provide signals in said frequency range already in use to a line distribution device (200);
a power supply unit (204) to supply power to said amplifying circuits; and a choke (208) to extract AC power from said input port (203) to provide power to said power supply..

28. The compensation unit of claim 27, wherein said frequency selective circuit comprises first and second multiplexers (210, 220), each including a first filter to filter the signals the frequency range already in use, a second filter to filter at least one upstream channel of said extended frequency range, and a third filter to filter at least one downstream channel of said extended frequency range.

29. The compensation unit of claim 28, wherein said amplifying circuit comprises:
a first amplification section connected between the second filter of said first multiplexer and the second filter of said second multiplexer, to amplify signals of said upstream channel; and
a second amplification section connected between the third filter of said first multiplexer and the third filter of said second multiplexer, to amplify signals of said downstream channel.

30. The compensation unit of claim 28, wherein said first filter comprises a low-pass-filter to pass frequencies within the range of about 5-750MHz; said second filter comprises a high-pass-filter to pass frequencies within the range of about 2150-3000MHz; and said third filter comprises a band-pass-filter to pass frequencies within the range of about 1050-1950MHz.

31. The compensation unit of claim 28 comprising:
a first connection (203) to couple said first multiplexer (210) to said communication network;
a second connection (260) to couple the first filter (212) of said first multiplexer to an input of a CATV line distribution device (200);
a third connection (262) to couple an output of said CATV line distribution device to the first filter (222) of said second multiplexer; and
a fourth connection (204) to couple said second multiplexer (220) to said communication network.

32. The compensation unit of claim 31 comprising a plurality of RF chokes (206, 208, 205) to route an AC power signal received from the first filter (212) of said first multiplexer to said fourth connection via said CATV line distribution device.

## Patentansprüche

1. System zur Erweiterung der Übertragungsbandbreite eines Kabelfernseh-(CATV)-Kommunikationsnetzwerks in beide Richtungen über einen vergrößerten Frequenzbereich, das Netzwerk umfasst eine kopfseitige Einheit (36), mindestens einen mit der kopfseitigen Einheit (36) verbundener Verteiler oder Knoten (48, 50, 52), eine Vielzahl von mit dem mindestens einen Verteiler oder Knoten über Kabel verbundene Heimanschlüsse (70) und eine Vielzahl von Set-Top-Boxen (89), der erweiterte Frequenzbereich umfasst einen bereits in dem Kommunikationsnetzwerk für existierende Kanäle (10, 12) benutzten Frequenzbereich und einen erweiterten Frequenzbereich, der mindestens einen Teilmenge von Frequenzbändern von 1-3 GHz (21) für zusätzliche Kanäle enthält, wobei das System umfasst:
Eine Vielzahl von über vorbestimmte Stellen innerhalb des Netzwerks verteilten, mit Ein- und Ausgängen (203, 204) versehenen Kompensationseinheiten (202) zum Erneuern und Aufrechterhalten der Eigenschaften des erweiterten Frequenzbereichs, um Spannungsabfallverluste aufgrund der Netzwerkinfrastrukturtopographie bei dem erweiterten Frequenzbereich zu überwinden, jede Kompensationseinheit umfasst eine erste Frequenzauswahlschaltung (210) zum Auswählen des erweiterten Frequenzbereichs in eine erste Richtung des Kommunikationsnetzwerks und eine zweite Frequenzauswahlschaltung (220) zum Auswählen des erweiterten Frequenzbereichs in einen zweite Richtung des Kommunikationsnetzwerks und eine erste Verstärkungsschaltung (229) zum Verstärken des ausgewählten erweiterten Frequenzbereichs in eine erste Richtung des Kommunikationsnetzwerks und eine zweite Verstärkungsschaltung (231) zum Verstärken des ausgewählten erweiterten Frequenzbereichs in eine zweite Richtung des Kommunikationsnetzwerks, der erste und die zweite Verstärkungsschaltung umfassen eine oder mehrere Ausgleichsschaltungen (232, 236, 242, 246), welche die Kontrolle von Verstärkung, Steigung und/oder Amplitude des ausgewählten erweiterten Frequenzbereichs in die erste oder die zweite Richtung des Kommunikationsnetzwerks erlauben, um den in den ausgewählten erweiterten Frequenzbereich eingeführten Anstieg der Leitungsdämpfung zu korrigieren, Tiefpassfilter (212, 222) zum Bereitstellen von Signalen an eine Leitungsverteilungsvorrichtung (200) in dem bereits verwendeten Frequenzbereich, eine Energieversorgungseinheit (204) zur Versorgung der Verstärkungsschaltungen mit Energie und eine Drossel (208) zum Extrahieren von Wechselstromenergie von dem Eingang (203), um Energie an die Energieversorgung (204) bereitzustellen;
eine erweiterte Heimanschlusseinheit (75) umfassend eine Filterschaltung zum Separieren des erweiterten Frequenzbereichs von dem bereits in Verwendung befindlichen Frequenzbereich; und
eine erweiterte Set-Top-Box (85, 85') mit einer Abgleichvorrichtung (80) zum Kontrollieren der zusätzlichen Kanäle, um es dem Benutzer zu ermöglichen, mit den zusätzlichen Kanälen zu interagieren; wobei die Übertragung von Daten in einem erweiterten Frequenzbereich und mit wesentlich höheren Datenraten ermöglicht wird.

2. System nach Anspruch 1, wobei das Kommunikationsnetzwerk ein Kabelfernsehsystem ist, das eine Vielzahl von Übertragungskanälen verwendet und Audio-, Video-, textuelle, analoge und digitale Information verteilt.

3. System nach Anspruch 1, wobei der erweiterte Frequenzbereich Frequenzen zwischen ungefähr 1 GHz bis 3 GHz umfasst.

4. System nach Anspruch 1, wobei der erweiterte Frequenzbereich Aufwärts- und Abwärtsrichtung umfasst.

5. System nach Anspruch 1, weiter umfassend ein mit dem mindestens einen Verteiler oder Knoten verbundenes Verteilererweiterungsmodul zum Hinzufügen von Verstärkung und Steigung an Verluste des erweiterten Frequenzbereichs.

6. System nach Anspruch 5, wobei das Verteilererweitungsmodul weiter einen Datenkommunikationseinheit umfasst, wobei die Datenkommunikationseinheit einen Duplex-Empfänger oder -Übertrager zum Kommunizieren von Daten über den erweiterten Frequenzbereich umfasst.

7. System nach Anspruch 6, wobei die Datenkommunikationseinheit umfasst:
einen Empfänger-Übertrager zum Empfangen von Daten von einem Kommunikationsnetzwerk und zum Übertragen von Daten an das Kommunikationsnetzwerk;
einen Demodulator-Modulator zum Entkodieren der Daten; und
einen Datenrouter zum Leiten der Daten an das Datenkommunikationsnetzwerk und zum Leiten der Daten an eine zentrale Prozessoreinheit zum Bearbeiten.

8. System nach Anspruch 6 wobei das Verteilermodul weiter einen Multiplexer zum Kombinieren eines am kopfseitigen Ende erzeugten Signals mit von der Datenkommunikationseinheit übertragenen Daten umfasst.

9. System nach Anspruch 1 weiter umfassend eine erweiterte Kabelverbindereinheit umfassend einen Koaxialadapter, der an einen Standardkabelverbinder angepasst ist, um die Übertragung eines über den erweiterten Frequenzbereich modulierten Signals zu ermöglichen.

10. System nach Anspruch 1, wobei jede Kompensationseinheit weiter einen Filter zum Separieren mindestens eines Aufwärts -und eines Abwärts-Kanals umfasst.

11. System nach Anspruch 1, wobei die Kompensationsfrequenzauswahlschaltung ein einstufiger Multiplexer zum Separieren des erweiterten Frequenzbereichs von der bereits verwendeten Frequenzbereichs, eines erweiterten Abwärts-Frequenzbereichs und eines erweiterten Aufwärts-Frequenzbereichs ist.

12. System nach Anspruch 1, wobei die Verstärkungsschaltung der Kompensationseinheit einen Abwärts-Signalverstärker und einen Aufwärts-Signalverstärker umfasst.

13. System nach Anspruch 1, wobei die Kompensationseinheit weiter umfasst:
eine Eingangsverbindung zum Empfangen eines Abwärts-Signals und zum Übertragen eines Aufwärts-Signals;
eine mit einer Ausgangsverbindung der Frequenzauswahlschaltung gekoppelte Ausgleichsschaltung zum Dämpfen niedrigerer Frequenzen des Abwärts- und Aufwärts-Signals, und
mindestens eine Ausgangsverbindung zum Bereitstellen des Abwärts-Signals nach der Bearbeitung durch die Frequenzauswahlschaltung, die Ausgleichsschaltung und die Verstärkerschaltung und zum Empfangen des Aufwärts-Signals.

14. System nach Anspruch 13, wobei die Verstärkungsschaltung der Kompensationseinheit mit dem Ausgang der Ausgleichsschaltung zur Verstärkung des Abwärts-Signals und des Aufwärts-Signals gekoppelt ist.

15. System nach Anspruch 13, wobei die Kompensationseinheit weiter eine mit der Ausgangsverbindung der Kompensationseinheit gekoppelte Kommunikationsnetzwerk-Leitungsverteilungseinheit zum Empfangen des Abwärts-Signals umfasst, wobei die Leitungsverteilungseinheit eine Ausgangsverbindung zum Bereistellen des Abwärts-Signals und des Aufwärts-Signals umfasst.

16. System nach Anspruch 1 weiter umfassend eine erweiterte Heim-Teiler-Einheit, die erweiterte Heim-Teiler-Einheit umfasst einen Bandteiler zum Aufteilen des vergrößerten Frequenzbereichs in den erweiterten Frequenzbereich und den bereits in Verwendung befindlichen Frequenzbereich und einen Verstärker zum Kompensieren der Verluste des erweiterten Frequenzbereichs.

17. System nach Anspruch 1, wobei die Kompensationseinheit als einzelstehende Einheit mit dem Kommunikationsnetzwerk verbunden ist.

18. System nach Anspruch 1, wobei die Kompensationseinheit die symmetrische Zweiwegeübertragung von Signalen in den erweiterten Frequenzbereich unterstützt.

19. System nach Anspruch 1, wobei die Kompensationseinheit die asymmetrische Zweiwegeübertragung von Signalen in den erweiterten Frequenzbereich unterstützt.

20. System nach Anspruch 5, wobei das Verteilererweiterungsmodul als eine symmetrische Vorrichtung zum Unterstützen der symmetrischen Zweiwegeübertragung von Signalen im erweiterten Frequenzbereich mit dem Kommunikationsnetzwerk verbunden ist.

21. System nach Anspruch 5, wobei das Verteilererweiterungsmodul als eine asymmetrische Vorrichtung zum Unterstützen der asymmetrischen Zweiwegeübertragung von Signalen im erweiterten Frequenzbereich mit dem Kommunikationsnetzwerk verbunden ist.

22. System nach Anspruch 16, wobei die erweiterte Heim-Teiler-Einheit eine symmetrische Zweiwegeübertragung von Signalen in dem bereits in Verwendung befindlichen Frequenzbereich und dem erweiterten Frequenzbereich unterstützt.

23. System nach Anspruch 16, wobei die erweiterte Heim-Teiler-Einheit eine asymmetrische Zweiwegeübertragung von Signalen in dem bereits in Verwendung befindlichen Frequenzbereich und dem erweiterten Frequenzbereich unterstützt.

24. Verfahren zum Erweitern der operativen Bandbreite eines Kabelfernseh-(CATV)-Kommunikationsnetzwerks, das eine Kommunikationsmedieninfrastruktur zur Übertragung eines Breitbandsignals von einem Übertragungszentrum über unterschiedliche elektronische Komponenten, die in der Aufrechterhaltung des übertragenen Signals an eine Vielzahl von Benutzern und von der Vielzahl von Benutzern über die Kommunikationsmedien und die diversen elektronischen Komponenten an das Übertragungszentrum arbeiten, das Breitbandsignal repräsentiert Informationseinheiten, welche von externen Informationsquellen empfangen und an diese gesendet wurden, die Informationseinheiten sind in modulierten, in das Breitbandsignal multigeplexten elektronischen Signalen kodiert, und der erweiterte Frequenzbereich enthält mindestens eine Teilmenge eines Frequenzbands von 1-3 GHz, das Verfahren umfasst:
Zusammenfügen von für die von den Informationsquellen empfangenen Informationen repräsentativen Signalen in ein in einen erweiterten Frequenzbereich moduliertes kombiniertes Breitbandsignal,
Überlagern von für von zusätzlichen Informationsquellen empfangenen Informationseinheiten repräsentativen Signalen auf das Breitbandsignal; und
Modulieren und Übertragen des kombinierten Breitbandsignals über den erweiterten Frequenzbereich an eine Vielzahl von Benutzern oder an ein Übertragungszentrum;
separates Verstärken des Breibandsignals an die Vielzahl von Benutzern und von der Vielzahl von Benutzern, um Spannungsabfallverluste aufgrund der Netzwerkinfrastrukturtopographie zu kompensieren;
separates Hinzufügen von Verstärkung und Steigung zum Breitbandsignal an die Vielzahl von Benutzern und von der Vielzahl von Benutzern zur Kompensation von Signalverlusten;
separates Filtern des Breitbandsignals an eine Vielzahl von Benutzern und von einer Vielzahl von Benutzern zum Trennen des Breitbandsignals entsprechend vordefinierter Frequenzbereiche und entsprechend vordefinierter auf den Signalinhaltstyp und die Richtung des Breitbandsignals bezogener Parameter; und
Abgleichen des getrennten Signals zum Steuern der Trennung des getrennten Signals in vordefinierte Frequenzbereiche;
Bereitstellen eines Signals in dem bereits in Verwendung befindlichen Frequenzbereich an eine Verteilereinheit über Tiefpassfilter; und
Extrahieren von Wechselstromenergie mit einer Drossel an eine Energieversorgung zum Versorgen der Verstärkungsschaltungen mit Energie;
wobei zur Übertragung im erweiterten Frequenzbereich ein Standardübertragungsmedium verwendet wird, das vorher in einer wesentlich schmaleren Bandbreite betrieben wurde.

25. System nach Anspruch 1, wobei die erweiterte Set-Top-Box als eine symmetrische Vorrichtung zum Unterstützen einer symmetrischen Zweiwegeübertragung von Signalen in dem erweiterten Frequenzbereich mit einem Kommunikationsnetzwerk verbunden ist.

26. System nach Anspruch 1, wobei die erweiterte Set-Top-Box als eine asymmetrische Vorrichtung zum Unterstützen einer asymmetrischen Zweiwegeübertragung von Signalen in dem erweiterten Frequenzbereich mit einem Kommunikationsnetzwerk verbunden ist.

27. Kompensationseinheit (202) mit Eingängen und Ausgängen (203, 204) zum Erweitern der Übertragungsbandbreite eines Kabelfernseh-(CATV)-Kommunikationsnetzwerks in einen vergrößerten Frequenzbereich, der bereits einen durch das CATV-Kommunikationsnetzwerk für existierende Kanäle (10, 20) in Verwendung befindlichen Frequenzbereich und einen erweiterten Frequenzbereich, der mindestens eine Teilmenge aus einem Frequenzband von 1-3 GHz (21) für zusätzliche Kanäle enthält, einschließt, wobei die Kompensationseinheit umfasst:
eine erste Verstärkungsschaltung (229) zum Verstärken von Signalen eines ausgewählten ersten Frequenzbereichs des erweiterten Frequenzbereichs in eine erste Richtung des Kommunikationsnetzwerks und eine zweite Verstärkungsschaltung (231) zum Verstärken von Signalen eines ausgewählten zweiten Frequenzbereichs des erweiterten Frequenzbereichs in eine zweite Richtung des Kommunikationsnetzwerks, die erste und zweite Verstärkungsschaltung umfassen eine oder mehrere Ausgleichsschaltungen (232, 236, 242, 246), welche die Kontrolle von Verstärkung, Steigung und/oder Amplitude des ausgewählten Frequenzbereichs erlauben, um den in den ausgewählten Frequenzbereich eingeführten Anstieg der Leitungsdämpfung zu korrigieren;
eine erste Frequenzauswahlschaltung (210) zum Empfangen von Signalen des ausgewählten Frequenzbereichs und Signalen des bereits in Verwendung befindlichen Frequenzbereichs aus einer ersten Richtung des Kommunikationsnetzwerks aus dem Kommunikationsnetzwerk und einer zweiten Frequenzauswahlschaltung (220) zum Empfangen von Signalen des ausgewählten Frequenzbereichs und Signalen des bereits in Verwendung befindlichen Frequenzbereichs aus einer zweiten Richtung des Kommunikationsnetzwerks aus dem Kommunikationsnetzwerk, zum selektiven Übertragen der Signale des ausgewählten Frequenzbereichs aus der ersten oder der zweiten Richtung des Kommunikationsnetzwerks an die erste bzw. zweite Verstärkungsschaltung, und zum Rückübertragen der verstärkten Signale und der Signale des bereits in Verwendung befindlichen Frequenzbereichs an das Netzwerk
Tiefpassfilter (212, 222) zum Bereitstellen von Signalen in dem bereits in Verwendung befindlichen Frequenzbereich an eine Leitungsverteilungsvorrichtung (200);
eine Energieversorgungseinrichtung (204) zum Versorgen der Verstärkungsschaltungen mit Energie; und
eine Drossel (208) zum Extrahieren von Wechselstromenergie von dem Eingang (203) zum Bereitstellen von Energie an die Energieversorgung.

28. Kompensationseinheit nach Anspruch 27, wobei die Frequenzauswahlschaltung erste und zweite Multiplexer (210, 220) umfasst, wobei jeder einen ersten Filter zum Filtern der Signale des bereits in Verwendung befindlichen Frequenzbereichs, einen zweiten Filter zum Filtern mindestens eines Aufwärts-Kanals des erweiterten Frequenzbereichs und einen dritten Filter zum Filtern mindestens eines Abwärts-Kanals des erweiterten Frequenzbereichs enthält.

29. Kompensationseinheit nach Anspruch 28, wobei die Verstärkungsschaltung umfasst:
eine zwischen dem zweiten Filter des ersten Multiplexers und dem zweiten Filter des zweiten Multiplexers verbundene erste Verstärkungssektion, um Signale des Aufwärts-Kanals zu verstärken; und
eine zwischen dem dritten Filter des ersten Multiplexers und dem dritten Filter des zweiten Multiplexers verbundene zweite Verstärkungssektion, um die Signale des Abwärts-Kanals zu verstärken.

30. Kompensationseinheit nach Anspruch 28, wobei der erste Filter einen Tiefpassfilter zum Durchlassen von Frequenzen im Bereich von etwa 5-750 MHz umfasst; der zweite Filter einen Hochpassfilter zum Durchlassen von Frequenzen im Bereich von etwa 2150-3000 MHz umfasst; und der dritte Filter einen Bandpassfilter zum Durchlassen von Frequenzen im Bereich von etwa 1050-1950 MHz umfasst.

31. Kompensationseinheit nach Anspruch 28, umfassend:
einen ersten Anschluss (203) zum Verbinden des ersten Multiplexers (210) mit dem Kommunikationsnetzwerk;
einen zweiten Anschluss (260) zum Verbinden des ersten Filters (212) des ersten Multiplexers mit einem Eingang einer CATV-Leitungsverteilungsvorrichtung (200);
einen dritten Anschluss (262) zum Verbinden eines Ausgangs der CATV-Leitungsverteilungsvorrichtung mit dem ersten Filter (222) des zweiten Multiplexers; und
einen vierten Anschluss (204) zum Verbinden des zweiten Multiplexers (220) mit dem Kommunikationsnetzwerk.

32. Kompensationseinheit nach Anspruch 31 umfassend eine Vielzahl von RF-Drosseln (206, 208, 205) zum Leiten eines vom ersten Filter (212) des ersten Multiplexers empfangenen Gleichstrom-Energiesignals an den vierten Anschluss über die CA TV -Leitungsverteilungsvorrichtung.

## Revendications

1. Système pour prolonger la largeur de bande de transmission d'un réseau bilatéral de communication de télévision par câble (CATV) à travers une portée ou plage de fréquences augmentée, le réseau comprenant un dispositif de tête (36), au moins un concentrateur ou noeud (48, 50, 52) connecté au dispositif de tête (36), une pluralité de sorties locales (70) connectées audit au moins un concentrateur ou noeud via des câbles et une pluralité de boîtiers décodeurs ou de tête (89), la portée ou plage de fréquences augmentée comprenant une portée ou plage de fréquence déjà utilisée par le réseau de communication pour des canaux existants (10, 12) et une portée ou plage de fréquence prolongée comprenant au moins un sous-ensemble de bande de fréquence de 1-3 GHZ (21) pour des canaux supplémentaires, le système comprenant :
une pluralité de dispositifs de compensation (202) ayant des ports d'entrée et de sortie (203, 204) répartis sur des emplacements prédéterminés à l'intérieur du réseau pour rafraîchir et maintenir les caractéristiques de la portée ou plage de fréquence prolongée pour surmonter les pertes de ligne associées à la portée ou plage de fréquence prolongée due à la topographie de l'infrastructure du réseau, chaque dispositif de compensation comprend un premier circuit sélectif de fréquence (210) pour sélectionner la portée ou plage de fréquence prolongée dans une première direction dudit réseau de communication et un second circuit sélectif de fréquence (220) pour sélectionner la portée ou plage de fréquence prolongée dans une seconde direction dudit réseau de communication et un premier circuit amplificateur (229) pour amplifier la portée ou plage de fréquence prolongée sélectionnée dans une première direction dudit réseau de communication et un second circuit amplificateur (231) pour amplifier la portée de fréquence prolongée sélectionnée dans une seconde direction dudit réseau de communication, ledit premier et ledit second circuit amplificateur comprenant un ou plusieurs égaliseurs(232, 236, 242, 246), qui permettent la commande du gain, de la pente et/ou de l'amplitude de la portée ou plage de fréquence prolongée sélectionnée dans ladite première ou ladite seconde direction dudit réseau de communication respectivement pour corriger la pente d'atténuation du câble sur la fréquence introduite dans la portée ou plage de fréquence prolongée sélectionnée, des filtres passe-bas (212, 222) pour fournir des signaux dans ladite portée ou plage de fréquence déjà utilisée vers un dispositif de répartition de ligne (200), un bloc d'alimentation (204) pour alimenter lesdits circuits amplificateurs et une bobine d'arrêt (208) pour extraire l'alimentation en courant alternatif dudit port d'entrée (203) pour alimenter ledit bloc d' alimentation(204) ;
un dispositif de sortie locale prolongée (75) comprenant un circuit de filtration pour séparer la portée de fréquence prolongée de la portée de fréquence déjà utilisée ; et
un boîtier décodeur ou de tête prolongé (85, 85') comprenant un syntoniseur (80) pour contrôler les canaux supplémentaires afin de permettre à l'utilisateur d'interagir avec les canaux supplémentaires ; de sorte que soit possible la transmission de données dans une plage ou portée de fréquences prolongée et à des débits de données sensiblement plus élevés.

2. Système de la revendication 1 dans lequel le réseau de communication est un système de télévision par câble utilisant une pluralité de canaux de transmission et distribuant des informations audio, vidéo, texte, analogique et numérique.

3. Système selon la revendication 1 dans lequel la portée de fréquences prolongée comprend des fréquences entre environ 1 GHZ à environ 3 GHZ.

4. Système de la revendication 1 dans lequel les portées de fréquence prolongées comprennent un élément ou flux montant et un élément ou flux descendant.

5. Système de la revendication 1 comprenant en outre un module d'augmentation de concentrateur connecté audit au moins un concentrateur ou noeud pour ajouter gain et pente aux pertes de la portée de fréquence prolongée.

6. Système de la revendication 5 dans lequel le module d'augmentation de concentrateur comprend en outre un dispositif de communication de données, le dispositif de communication de données comprend un récepteur ou émetteur bidirectionnel pour communiquer les données à travers la portée ou plage de fréquence prolongée.

7. Système de la revendication 6 dans lequel le dispositif de communication de données comprend :
un émetteur-récepteur pour recevoir les données à partir d'un réseau de communication de données et pour transmettre les données vers le réseau de communication de données ;
un modulateur-démodulateur pour coder les données ; et
un routeur de données pour conduire les données vers le réseau de communication de données et pour conduire les données vers un dispositif de traitement central pour le traitement.

8. Système de la revendication 6 dans lequel le module concentrateur comprend en outre un multiplexeur pour combiner un signal généré par le dispositif de tête avec les données transmises à partir du dispositif de communication de données.

9. Système de la revendication 1 comprenant en outre un ensemble câble-connecteur augmenté comprenant un adaptateur coaxial monté sur un câble-connecteur standard pour permettre la transmission du signal modulé à travers la portée de fréquence prolongée.

10. Système de la revendication 1 dans lequel chaque dispositif de compensation comprend en outre un filtre de séparation entre au moins un canal montant et un canal descendant.

11. Système de la revendication 1 dans lequel le circuit sélectif de fréquence de compensation est un multiplexeur à un étage pour séparer la portée de fréquence augmentée de la portée de fréquence déjà utilisée, une portée de fréquence descendante prolongée et une portée de fréquence montante prolongée.

12. Système selon la revendication 1 dans lequel le circuit amplificateur du dispositif de compensation comprend un amplificateur de signal descendant et un amplificateur de signal montant.

13. Système de la revendication 1 dans lequel le dispositif de compensation comprend en outre :
une connexion d'entrée pour recevoir un signal descendant et pour transmettre un signal montant ;
un circuit égaliseur couplé à une connexion de sortie du circuit sélectif de fréquence pour atténuer les fréquences plus basses des signaux descendants et montants ; et
au moins une connexion de sortie pour fournir le signal descendant après traitement par le circuit sélectif de fréquence, le circuit égaliseur et le circuit amplificateur, et pour recevoir le signal montant.

14. Système de la revendication 13 dans lequel le circuit amplificateur du dispositif de compensation est couplé à la sortie du circuit égaliseur pour l'amplification du signal descendant et du signal montant.

15. Système de la revendication 13 dans lequel le dispositif de compensation comprend en outre un dispositif de répartition de ligne du réseau de communication couplé à la connexion de sortie du dispositif de compensation pour recevoir le signal descendant, le dispositif de répartition de ligne ayant une connexion de sortie pour fournir le signal descendant et le signal montant.

16. Système de la revendication 1 comprenant en outre un dispositif de répartition local augmenté, le dispositif de répartition local augmenté comprend un diviseur de bande pour séparer la portée de fréquence augmentée de la portée de fréquence prolongée et de la portée de fréquence déjà utilisée, et un amplificateur pour compenser les pertes dans la portée de fréquence prolongée.

17. Système de la revendication 1 dans lequel le dispositif de compensation est connecté au réseau de communication comme dispositif autonome.

18. Système de la revendication 1 dans lequel le dispositif de compensation supporte une transmission symétrique bidirectionnelle de signaux dans la portée de fréquence prolongée.

19. Système de la revendication 1 dans lequel le dispositif de compensation supporte une transmission asymétrique bidirectionnelle de signaux dans la portée de fréquence prolongée.

20. Système de la revendication 5 dans lequel le module d'augmentation de concentrateur est connecté au réseau de communication comme dispositif symétrique pour supporter une transmission symétrique bidirectionnelle de signaux dans la portée de fréquence prolongée.

21. Système de la revendication 5 dans lequel le module d'augmentation de concentrateur est connecté au réseau de communication comme dispositif asymétrique pour supporter une transmission asymétrique bidirectionnelle de signaux dans la portée de fréquence prolongée.

22. Système de la revendication 16 dans lequel le dispositif de répartition local augmenté supporte une transmission symétrique bidirectionnelle de signaux dans la portée de fréquence déjà utilisée et la portée de fréquence prolongée.

23. Système de la revendication 16 dans lequel le dispositif de répartition local augmenté supporte une transmission asymétrique bidirectionnelle de signaux dans la portée de fréquence déjà utilisée et la portée de fréquence prolongée.

24. Procédé pour augmenter la largeur de bande opérationnelle du réseau de communication de télévision par câble (CATV) utilisant une infrastructure de moyens de communications pour la transmission d'un signal à large bande à partir d'un centre de transmission via divers composants électroniques fonctionnant pour conserver le signal transmis vers une pluralité d'utilisateurs, et à partir d'une pluralité d'utilisateurs via les moyens de communication et les divers composants électroniques vers le centre de transmission, le signal à large bande représentant des dispositifs d'informations reçus de et envoyés vers des sources d'informations externes, les dispositifs d'informations codés en signaux électroniques modulés multiplexés dans le signal à large bande, la portée de fréquence prolongée incluant au moins un sous-ensemble d'une bande de fréquence de 1-3 GHZ, le procédé comprenant :
la combinaison de signaux représentatifs des informations reçues à partir des sources d'informations dans un signal à large bande combiné et modulé à travers une portée ou plage de fréquence prolongée ;
la superposition de signaux représentatifs des dispositifs d'informations reçus à partir des sources d'informations supplémentaires sur le signal à large bande ; et
la modulation et la transmission du signal à large bande combiné à travers la portée ou plage de fréquence prolongée vers une pluralité d'utilisateurs ou vers un centre de transmission ;
l'amplification séparée du signal à large bande vers ladite pluralité d'utilisateurs et à partir de ladite pluralité d'utilisateurs pour compenser les pertes de ligne dues à la topographie de l'infrastructure du réseau ;
l'ajout séparé du gain et de la pente au signal à large bande vers ladite pluralité d'utilisateurs et à partir de ladite pluralité d'utilisateurs pour compenser les pertes de signal ;
le filtrage séparé du signal à large bande vers ladite pluralité d'utilisateurs et à partir de ladite pluralité d'utilisateurs pour diviser le signal à large bande selon les régions de fréquence prédéfinies et selon les paramètres prédéfinis se rapportant au type de contenu du signal et à la direction du signal à large bande; et
le réglage du signal divisé pour commander ladite division du signal divisé dans des régions à fréquence prédéfinie ;
la fourniture d'un signal dans la portée de fréquence déjà utilisée vers un dispositif de répartition via des filtres passe-bas ; et
l'extraction par une bobine d'arrêt à alimentation en courant alternatif vers un bloc d'alimentation pour alimenter les circuits amplificateurs ;
de manière à utiliser un moyen de transmission standard fonctionnant précédemment dans une largeur de bande significativement plus étroite pour la transmission dans la portée de fréquence prolongée.

25. Système selon la revendication 1 dans lequel le boîtier décodeur prolongé est connecté à un réseau de communication comme dispositif symétrique pour supporter une transmission symétrique bidirectionnelle de signaux dans la portée de fréquence prolongée.

26. Système selon la revendication 1 dans lequel le boîtier décodeur prolongé est connecté à un réseau de communication comme dispositif asymétrique pour supporter une transmission asymétrique bidirectionnelle de signaux dans la portée de fréquence prolongée.

27. Dispositif de compensation (202) ayant des ports d'entrée et de sortie (203, 204) pour prolonger la largeur de bande de transmission d'un réseau de communication de télévision par câble (CATV) à travers une portée ou plage de fréquences augmentée comprenant une portée ou plage de fréquence déjà utilisée par le réseau de communication CATV pour des canaux existants (10, 12) et une portée ou plage de fréquence prolongée comprenant au moins un sous-ensemble de bande de fréquence de 1-3 GHZ (21) pour des canaux supplémentaires, le dispositif de compensation comprenant :
un premier circuit amplificateur (229) pour amplifier les signaux d'une première portée de fréquence sélectionnée (19) de ladite portée ou plage de fréquence prolongée dans une première direction dudit réseau de communication et un second circuit amplificateur (231) pour amplifier les signaux de la seconde portée ou plage de fréquence sélectionnée (20) de ladite portée de fréquence prolongée dans une seconde direction dudit réseau de communication, lesdits circuits amplificateurs comprenant un ou plusieurs égaliseurs(232, 236, 242, 246), qui permettent la commande du gain, de la pente et/ou de l'amplitude de la portée de fréquence sélectionnée pour corriger la pente d'atténuation du câble sur la fréquence introduite dans la portée de fréquence sélectionnée ;
un premier circuit sélectif de fréquence (210) pour recevoir dudit réseau de communication les signaux de ladite portée de fréquence sélectionnée et les signaux de la portée de fréquence déjà utilisée à partir d'une première direction dudit réseau de communication et un second circuit sélectif de fréquence (220) pour recevoir dudit réseau de communication les signaux de ladite portée de fréquence sélectionnée et les signaux de la portée de fréquence déjà utilisée à partir d'une seconde direction dudit réseau de communication pour transférer sélectivement les signaux de ladite portée de fréquence sélectionnée de ladite première ou ladite seconde direction dudit réseau de communication vers ledit premier ou ledit second circuit amplificateur respectivement, et pour retransférer vers ledit réseau les signaux amplifiés et les signaux de la portée de fréquence déjà utilisée ;
des filtres passe-bas (212, 222) pour fournir des signaux dans ladite portée de fréquence déjà utilisée vers un dispositif de répartition de ligne (200) ;
un bloc d'alimentation (204) pour alimenter lesdits circuits amplificateurs ; et
une bobine d'arrêt (208) pour extraire l'alimentation en courant alternatif dudit port d'entrée (203) pour alimenter ledit bloc d'alimentation.

28. Dispositif de compensation de la revendication 27, dans lequel ledit circuit sélectif de fréquence comprend un premier et un second multiplexeur (210, 220), chacun comprenant un premier filtre pour filtrer les signaux de la portée de fréquence déjà utilisée, un deuxième filtre pour filtrer au moins un canal montant de ladite portée de fréquence prolongée, et un troisième filtre pour filtrer au moins un canal descendant de ladite portée de fréquence prolongée.

29. Dispositif de compensation de la revendication 28, dans lequel ledit circuit amplificateur comprend :
une première section d'amplification connectée entre le deuxième filtre dudit premier multiplexeur et le deuxième filtre dudit second multiplexeur, pour amplifier les signaux dudit canal montant ; et
une deuxième section d'amplification connectée entre le troisième filtre dudit premier multiplexeur et le troisième filtre dudit second multiplexeur, pour amplifier les signaux dudit canal descendant.

30. Dispositif de compensation de la revendication 28, dans lequel ledit premier filtre comprend un filtre passe-bas pour passer les fréquences dans la portée d'environ 5-750 MHZ ; ledit deuxième filtre comprend un filtre passe-haut pour passer les fréquences dans la portée d'environ 2150-3000 MHZ ; et ledit troisième filtre comprend un filtre passe-bande pour passer les fréquences dans la portée d'environ 1050-1950 MHZ.

31. Dispositif de compensation de la revendication 28 comprenant :
une première connexion (203) pour coupler ledit premier multiplexeur (210) audit réseau de communication ;
une deuxième connexion (260) pour coupler le premier filtre (212) dudit premier multiplexeur à une entrée du dispositif de répartition de ligne CATV (200);
une troisième connexion (262) pour coupler une sortie dudit dispositif de répartition de ligne CATV au premier filtre (222) dudit second multiplexeur ; et
une quatrième connexion (204) pour coupler ledit second multiplexeur (220) audit réseau de communication.

32. Dispositif de compensation de la revendication 31 comprenant une pluralité de bobines d'arrêt RF (206, 208, 205) pour router un signal à alimentation en courant alternatif reçu du premier filtre (212) dudit premier multiplexeur vers ladite quatrième connexion via ledit dispositif de répartition de ligne CATV.
